# EUROPEAN PATENT SPECIFICATION

(11) **EP 1 172 289 B1**
(45) Date of publication and mention of the grant of the patent: **03.11.2004**
(21) Application number: 01116360.7
(22) Date of filing: 05.07.2001
(51) Int. Cl.: B62K 11/02, B62K 11/04, B62J 25/00, B62K 19/48

(54) **Vehicle, especially scooter type vehicle**
Motorrad
Motocyclette

(30) Priority: 05.07.2000 JP 2000203828; 05.07.2000 JP 2000203834; 05.07.2000 JP 2000203835; 05.07.2000 JP 2000203837
(43) Date of publication of application: 16.01.2002
(60) Divisional application: 04004737.5
(73) Proprietor: YAMAHA HATSUDOKI KABUSHIKI KAISHA, Iwata-shi Shizuoka-ken (JP)
(72) Inventor: Ishii, Yoshihide, Iwata-Shi, Shizuoka-ken (JP); Kitamura, Yasuhiko, Iwata-Shi, Shizuoka-ken (JP); Tyofuku, Kenji, Iwata-Shi, Shizuoka-ken (JP); Kikuhara, Hiroshi, Iwata-Shi, Shizuoka-ken (JP); Miyagi, Keiji, Iwata-Shi, Shizuoka-ken (JP)
(74) Representative: Grünecker, Kinkeldey, Stockmair & Schwanhäusser Anwaltssozietät

(56) References cited:
- EP-A- 0 953 499
- FR-A- 2 709 465
- JP-A- 9 242 526
- US-A- 4 488 618
- US-A- 4 520 892
- US-A- 4 800 980
- PATENT ABSTRACTS OF JAPAN vol. 1998, no. 01, 30 January 1998 (1998-01-30) & JP 09 254851 A (HONDA MOTOR CO LTD), 30 September 1997 (1997-09-30)
- PATENT ABSTRACTS OF JAPAN vol. 016, no. 002 (M-1197), 7 January 1992 (1992-01-07) & JP 03 227788 A (SUZUKI MOTOR CORP), 8 October 1991 (1991-10-08)
- PATENT ABSTRACTS OF JAPAN vol. 1996, no. 07, 31 July 1996 (1996-07-31) & JP 08 058657 A (SUZUKI MOTOR CORP), 5 March 1996 (1996-03-05)

## Description

The present invention relates to a vehicle, especially scooter type vehicle according to the prior art portion of claim 1. A scooter comprising the features of this prior art portion is known from EP953499.

In a conventional scooter type vehicle, the external surface is covered with a plurality of covers, including a foot board with a foot rest for the rider, and a seat underside cover disposed a short distance below the seat.

However, in such a conventional scooter type vehicle, since the foot board is disposed adjacent to the seat underside cover, the design can be changed only when colors of these components are changed, restricting the degree of freedom in designing.

Furthermore, in some conventional scooter type vehicles, an engine is fixed to a body frame, the crank case of the engine is positioned downwardly of a seat for the rider, and the crank case is covered by cover members disposed downwardly of the seat.

However, in such a conventional scooter type vehicle, the crank case is protruded laterally of the vehicle furthest in the lateral direction compared with the other sections of the engine, and the side surface of the crank case is covered by cover members, so that the vehicle width is enlarged at the portion of the vehicle corresponding to the rider's leg, which has adverse effects on footing characteristics and design quality.

A conventional scooter type vehicle is provided with a body frame as a skeleton of the vehicle, and various kinds of covers are mounted on the body frame. Some of these covers are provided with foot rests for the rider.

However, in such a conventional scooter type vehicle, a plurality of stays supporting covers as well as a plurality of load carrying members at foot rests extend from the main frame, resulting in the provision of these multiple components and increased frame width.

In a conventional scooter type vehicle as a motorcycle, there is provided a seat adapted for a rider and a co-rider, and downwardly of this seat at the side of the vehicle is disposed a muffler extending upwardly toward the rear.

A tandem foot rest is also provided for the co-rider riding on the seat.

However, such a conventional type vehicle often has a structure of the tandem foot rest being disposed above or at the side of the muffler, so that the co-rider is forced to take a cramped posture.

It is an objective of the present invention to provide a vehicle, especially scooter type vehicle which can be easily handled and having a high design quality.

According to the present invention, said objective is solved by a vehicle, especially scooter type vehicle having the features of claim 1:

Accordingly, it is a special advantage of the invention to provide an arrangement of exterior components for scooter type vehicles capable of effecting an improved degree of freedom in designing.

It is a further advantage of the invention to provide a structure of an engine mounting section for scooter type vehicles having easy footing characteristics and improved design quality.

It is a further advantage of the invention to provide a body frame structure for scooter type vehicles capable of supporting covers and carrying load on the foot rests while effecting reduction in the number of parts.

It is a further advantage of the invention to provide a structure around a muffler for motorcycles in which a co-rider is able to rest his or her feet in a easy posture.

Preferred embodiments of the present invention are laid down in the respective dependent claims.

In the following, the present invention is explained in greater detail with respect to several embodiments thereof in conjunction with the accompanying drawings, wherein:
- Fig. 1: is a side view of a scooter type vehicle of a first embodiment;
- Fig. 2: is a plan view, partly in section, of a portion of the first embodiment;
- Fig. 3: is a front view of the scooter type vehicle of the first embodiment;
- Fig. 4: is a rear view of the scooter type vehicle of the first embodiment;
- Fig. 5: is a side view of the first embodiment, showing the rearward portion of the vehicle on the side from which a muffler can be seen;
- Fig. 6: is a view of a front section of the first embodiment as viewed from the seat section;
- Fig. 7: is a right side view of the first embodiment, with exterior components removed;
- Fig. 8: is a left side view of the first embodiment, with exterior components removed;
- Fig. 9: is a plan view of the first embodiment, with exterior components removed;
- Fig. 10: is a side view of the exterior section and body frames of the first embodiment;
- Fig. 11: is a side view of the body frames of the vehicle front of the first embodiment;
- Fig. 12: is a plan view of the vehicle front of the first embodiment;
- Fig. 13: is a side view of the exterior section of the first embodiment;
- Fig. 14: is a plan view of a handle section of the first embodiment;
- Fig. 15: is an exploded perspective view of an inner panel and a screen of the first embodiment;
- Fig. 16: is a sectional view taken in the direction of arrows B7-B7 of Fig. 3 of the first embodiment;
- Fig. 17: is a sectional view taken in the direction of arrows B1-B1 of Fig. 15 of the first embodiment;
- Fig. 18: is a sectional view taken in the direction of arrows B0-B0 of Fig. 3 of the first embodiment;
- Fig. 19: is a sectional view taken in the direction of arrows C3-C3 of Fig. 6 of the first embodiment;
- Fig. 20: is a sectional view taken in the direction of arrows B8-B8 of Fig. 3 of the first embodiment;
- Fig. 21: is a sectional view taken in the direction of arrows AF-AF of Fig. 10 of the first embodiment;
- Fig. 22: is an illustration, in profile, of the vehicle front of the first embodiment, showing body frames, a main switch and a housing section;
- Fig. 23: is an illustration, in top plan, of the vehicle front of the first embodiment, showing body frames, a main switch and a housing section;
- Fig. 24: is a sectional view taken in the direction of arrows C6-C6 of Fig. 6 of the first embodiment;
- Fig. 25: shows sectional views of the first embodiment, (a) a sectional view taken in the direction of arrows C5-C5 of Fig. 6 and (b) a sectional view taken in the direction of arrows C7-C7 of Fig. 6.
- Fig. 26: is a sectional view of the exterior section taken in the direction of arrows A1-A1 of Fig. 13 of the first embodiment;
- Fig. 27: shows sectional views of the first embodiment, (a) a sectional view taken in the direction of arrows A2-A2 of Fig. 10 and (b) a sectional view taken in the direction of arrows AQ-AQ of Fig. 10.
- Fig. 28: is a sectional view taken in the direction of arrows AY-AY of Fig. 10 of the first embodiment;
- Fig. 29: is a sectional view taken in the direction of arrows AV-AV of Fig. 10 of the first embodiment;
- Fig. 30: is a sectional view taken in the direction of arrows AW-AW of Fig. 10 of the first embodiment;
- Fig. 31: is a partly broken-away side view of a container box of the first embodiment;
- Fig. 32: is a plan view of the container box of the first embodiment;
- Fig. 33: is a sectional view taken in the direction of arrows D1-D1 of Fig. 4 of the first embodiment;
- Fig. 34: is a schematic side view showing a radiator and a fan of the first embodiment;
- Fig. 35: is a schematic front view showing an inner fender and the radiator of the first embodiment;
- Fig. 36: is a schematic plan view showing the inner fender and the radiator of the first embodiment;
- Fig. 37: is a horizontal sectional view showing a rear arm of the first embodiment;
- Fig. 38: is a side view of a muffler, a rear arm and an engine of the first embodiment, with a rear wheel removed;
- Fig. 39: is a sectional view of a rear cushion mounted on body components of the first embodiment;
- Fig. 40: is a side view showing a left division and a main stand of the first embodiment;
- Fig. 41: is a view of the main stand being set back upward, of the first embodiment, as seen from the rear;
- Fig. 42: is a side view showing the left division, main stand and rear cushion of the first embodiment;
- Fig. 43: is a plan view showing a right division and the muffler of the first embodiment;
- Fig. 44: is a side view of a rear wheel disk brake section of the first embodiment;
- Fig. 45: is a sectional view of a portion of a rear axle section of the first embodiment;
- Fig. 46: is a side view showing the main stand of the first embodiment;
- Fig. 47: shows views of the mounting structure of the muffler of the first embodiment, (a) a sectional view of a portion and (b) a front view of a slide nut and a nut retainer;
- Fig. 48: is a schematic plan view showing the air-intake structure in connection with a V-belt chamber of the first embodiment;
- Fig. 49: is a schematic side view showing the air-intake structure in connection with the V-belt chamber of the first embodiment;
- Fig. 50: is a view of an element in the air-intake structure of the first embodiment as seen from the rear; and
- Fig. 51: is a sectional view corresponding to Fig. 45, showing a second embodiment of this invention.

Now, embodiments will be described below.

### First embodiment

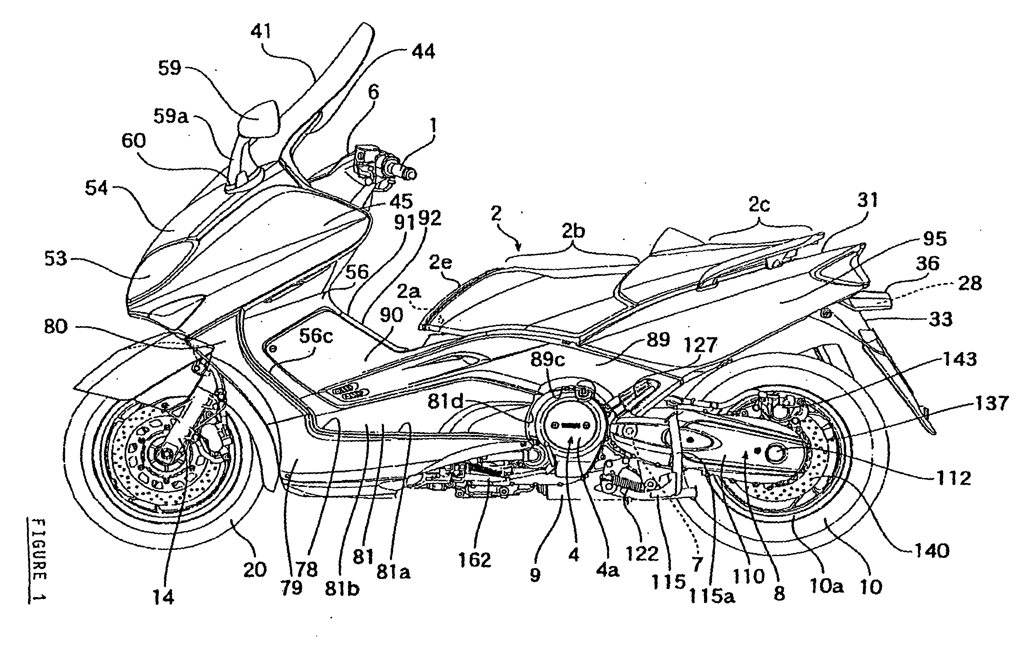

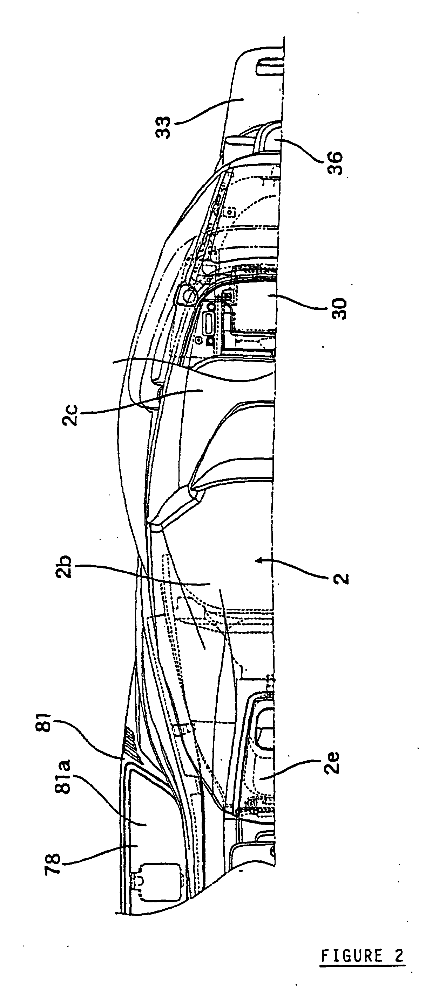

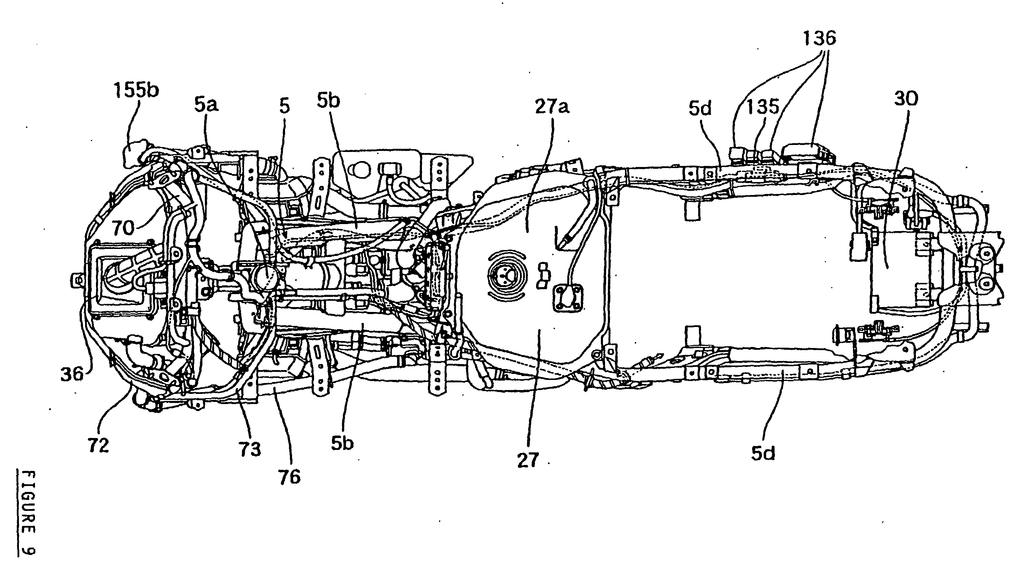

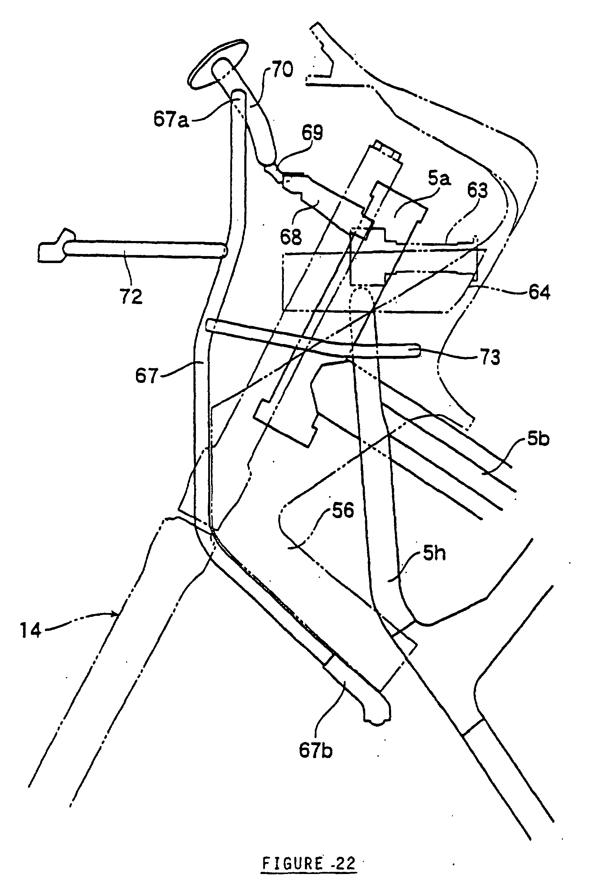

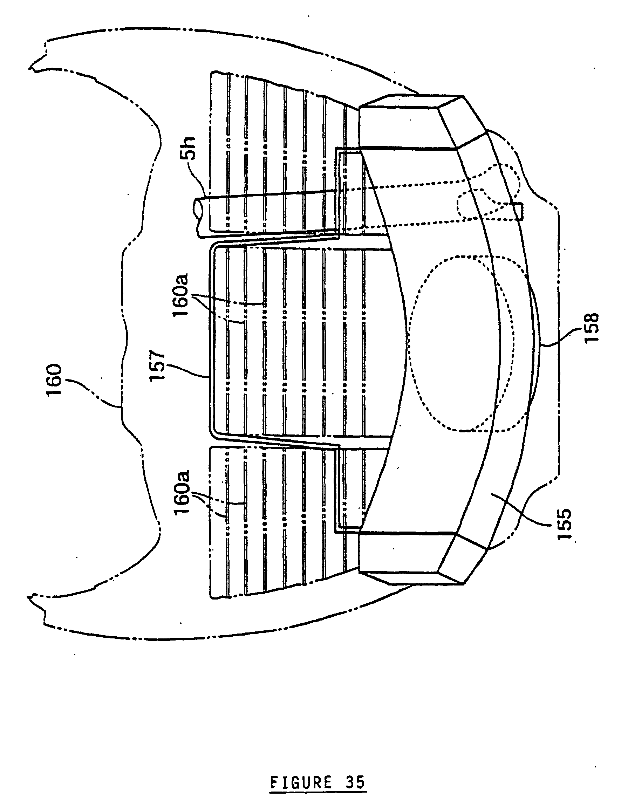

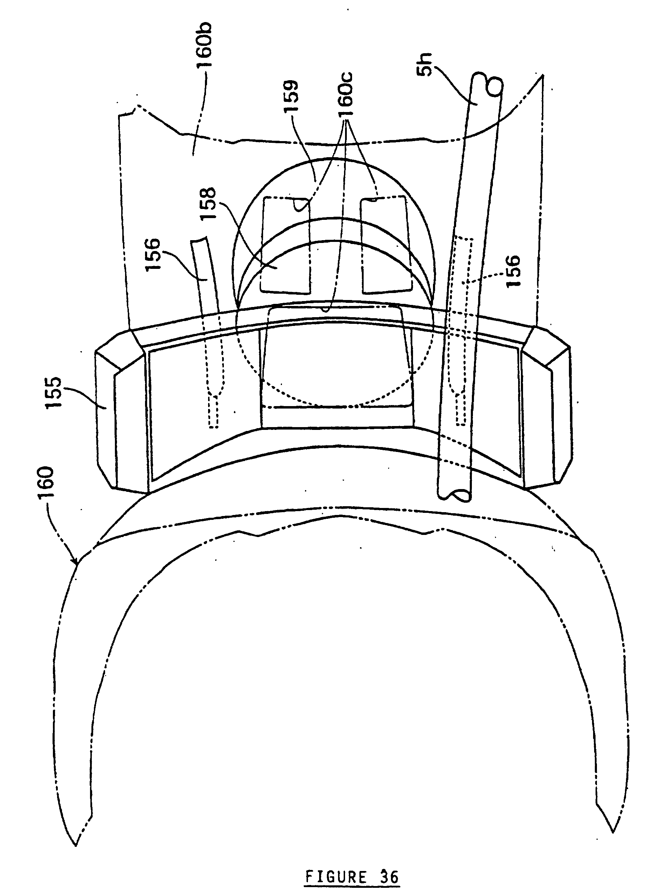

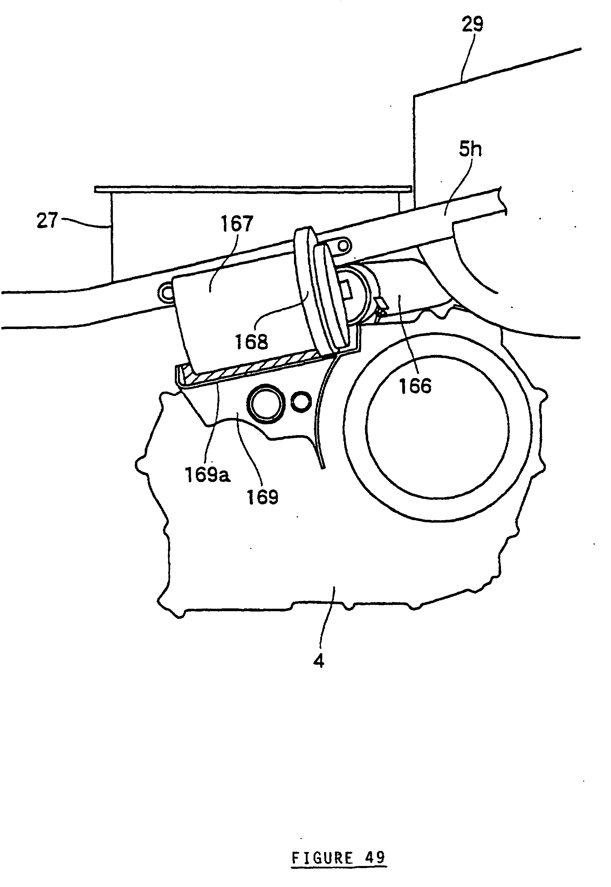

Figs. 1-50 show a first embodiment. In this embodiment, the whole of a scooter type vehicle as a motorcycle including specific features will be described.

Referring first to the construction, the scooter type vehicle of this embodiment is generally provided with a foot rest 81b of a low deck type between a handle 1 and a seat 2; an engine 4 is fixed, at this foot rest 81b, to a body frame 5 (hereinafter referred to as a "frame 5"); a rear arm 8 is disposed at the rear end of the engine 4 through a pivot shaft 7, for up and down swinging movement; a rear wheel 10 is supported on the rear end of the rear arm 8; and a rear cushion 9 is placed between the engine 4 and the rear arm 8.

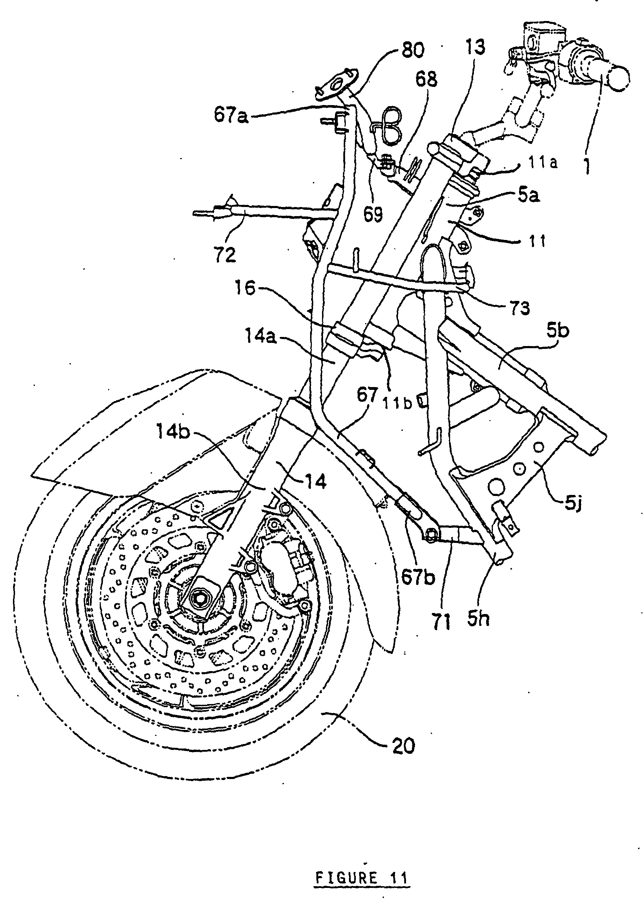

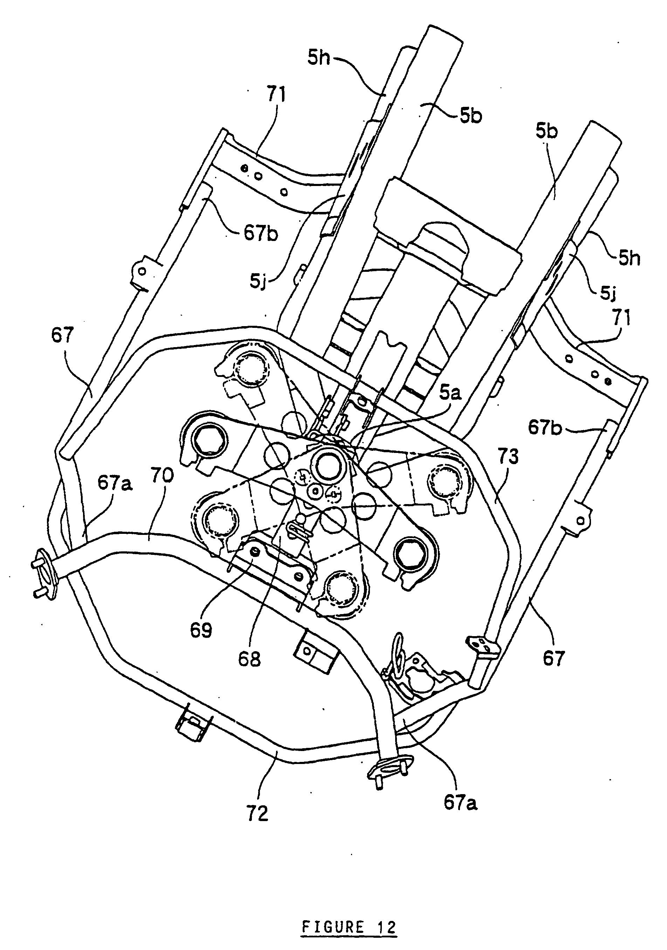

The frame 5, as shown in Figs. 11, 12, is provided with a cylindrical head pipe 5a, and an upper frame 5b and a lower frame 5h extending from the head pipe 5a toward the rear.

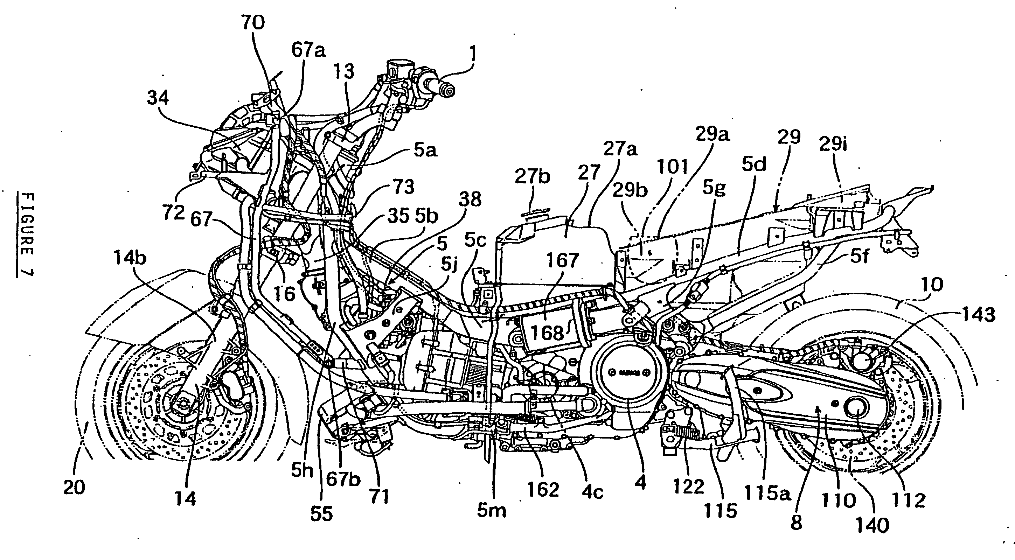

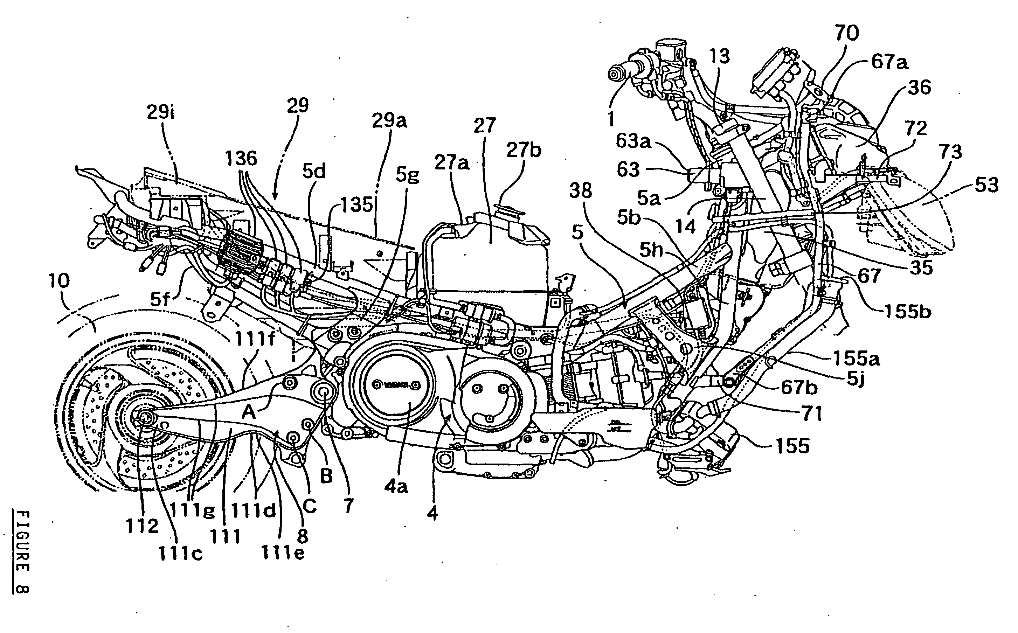

The upper frame 5b is formed of a pair of left and right pipes extending downwardly from the head pipe 5a toward the rear, and at the rear ends of the pair of upper frame pipes 5b, as shown in Figs. 7 and 8, etc, are disposed, through a box-like section 5c made of two metal plates coupled together in wafer cake-like fashion, a pair of rear pipes 5d, of a diameter smaller than that of the upper frame 5b, extending upwardly toward the rear. A cross member 5e is provided laterally of the vehicle between the pair of rear pipes 5d, and the forward ends of back stays 5f are fixed to the rear pipes 5d through brackets 5g, the rear ends of the back stays 5f being fixed directly to the rear portions of the rear pipes 5d.

The lower frame 5h is formed of a pair of left and right pipes extending obliquely downwardly from the head pipe 5a, and the lower frame 5h and the upper frame 5b is connected by a reinforcing frame 5j.

In the head pipe 5a of the frame 5 is supported for rotation a steering shaft 11 of the handle 1 passing therethrough. The upper end 11 a of the steering shaft 11 protruded from the head pipe 5a is connected to left and right front fork pipes 14 through a crown handle 13, and the lower end 11b thereof protruded from the head pipe 5a, to left and right front fork pipes 14 through an under bracket 16 (see Fig. 11)

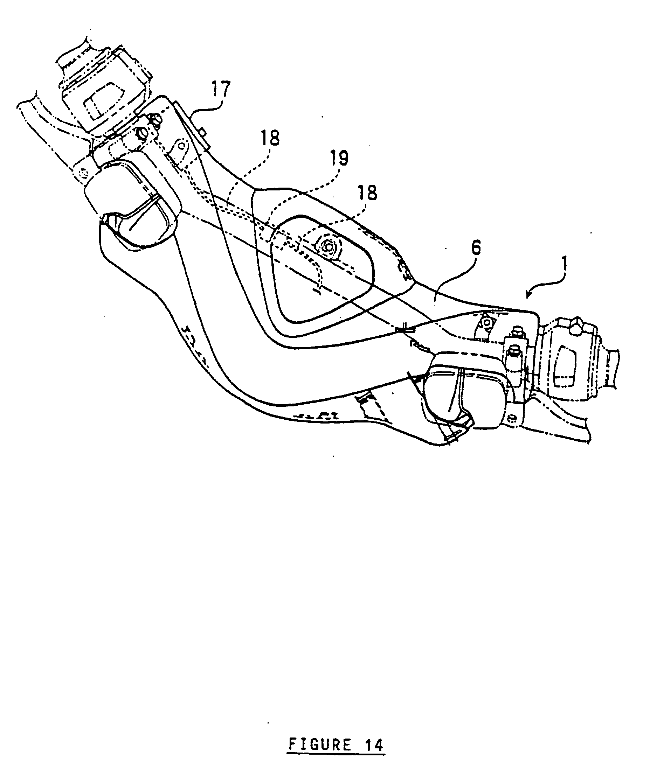

The crown handle 13 is mounted on the handle 1. The handle 1 is covered by a handle cover 6, in which are enclosed wiring 18 of a grip warmer 17 and a coupler 19 (see Fig. 14).

The front fork pipes 14 are of a telescopic type; upper inner tubes 14a are inserted in lower outer tubes 14b for axial sliding movement; the inner tubes 14a are biased upwardly by unillustrated springs; and a front wheel 20 is supported on the outer tubes 14b at the lower ends.

On the other hand, a crank case 4a in the upper part of the engine 4 is bolted to the box-like section 5c between the upper frame 5b and the rear pipes 5d, and the brackets 5g at the lower ends of the back stays 5f. The rear ends of the pair of lower frames 5h are pressed flat, and to the rear ends are fixed plate-like brackets 5m, respectively, to which is attached the lower forward portion of the crank case 4a of the engine 4. A side stand 162 is pivot-mounted to the bracket 5m.

Upwardly of the engine 4 are disposed a fuel tank 27 and a container box 29 behind the fuel tank 27, both supported on the frame 5, and further, the seat 2 is disposed above these components for pivotal movement on a hinge 32 at the forward end thereof.

On the other hand, in front of the head pipe 5a of the frame 5, an air cleaner 34, as shown in Fig. 7, etc, is fixed to the head pipe 5a, and the air cleaner 34 is connected to the engine 4 through an intake duct 35.

Specifically, the air cleaner 34 fixed to the head pipe 5a, is sized and configured such that even if the front fork pipes 14 are rotated as shown in Fig. 12 by double dot and dash lines, they will not interfere with surrounding components. Also, the intake duct 35 extending from the air cleaner 34 passes through a center tunnel 92 of the body cover (described later), and is connected to the engine 4 through a carburetor 38.

In front of the air cleaner 34 are disposed an inner panel 40, a screen 41, etc.

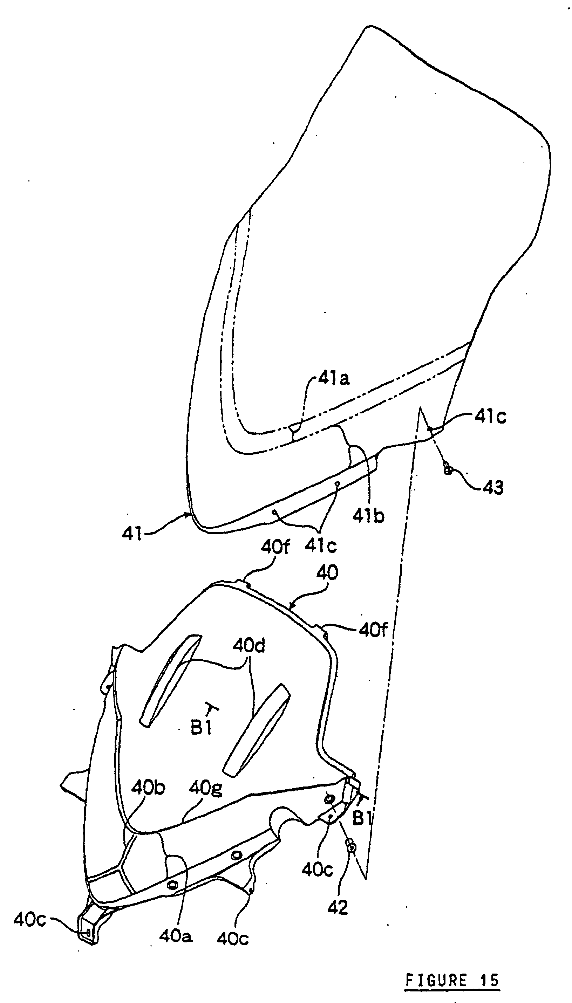

The inner panel 40, as shown in Fig. 15, is formed, in its lower part, with a V-shaped section 40a projecting in the shape of approximately a letter V, and in the peripheral portion of the V-shaped section 40a are provided a total of six nuts 42, three for each of the left and right sides, three nut on one side being omitted in this figure. These nuts 42, made of rubber, are formed, inside thereof, with female thread portions, and fitted in holes in the inner panel 40. The screen 41 is attached to the inner panel by screws 43 being fitted into these nuts 42.

Also, the inner panel 40 is formed, approximately at lower central portion of the V-shaped section 40a, with a drain groove 40b forked in its lower side. In a portion on the lower side of the inner panel 40 from the V-shaped section 40a are formed a plurality of fitting holes 40c for attachment to the vehicle body, and on a portion on the upper side thereof from the V-shaped section 40a are formed two projections 40d adapted to be in abutment against the back side of the screen 41. Further, the inner panel 40 are formed, at the upper end, with two engaging lips 40f, bent in the shape of approximately a letter U, for engagement with a meter cover 44 (described later)

On the other hand, the screen 41 is made of a transparent plastic; the lower part thereof is formed to nearly match the shape of the inner panel 40; at a position corresponding to the upper edge 40g of the V-shaped section 40a of the inner panel 40 is provided a gradation print section 41a; and at a portion on the lower side thereof from the gradation print section corresponding to the V-shaped section 40a, is provided an opaque black print section 41b. Further, in the lower edge of the screen 41 at positions corresponding to the nuts 42, are formed a total of six through holes 41c for the screws 43, three for each of left and right side of V-shaped section (three holes on one side are invisible in the figure).

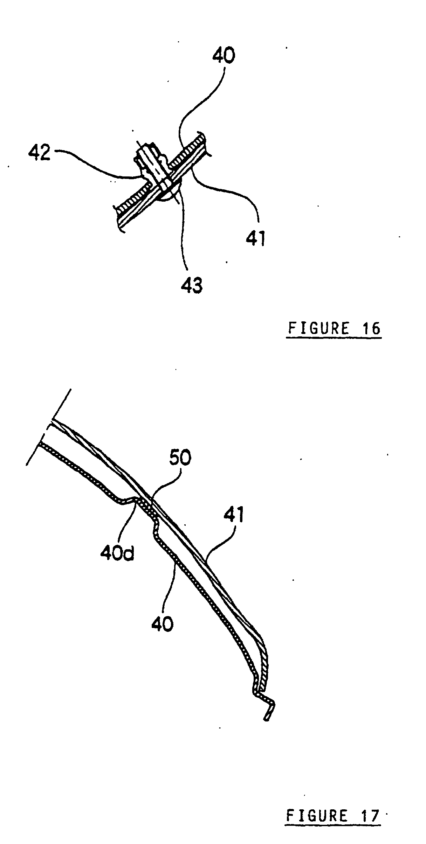

The screen 41, as shown in Fig. 16, is attached to the inner panel 40 by the screw 43 being fitted in the nuts 42, and the inner panel 40 is attached to the vehicle body, together with the screen 41. When the screen 41 is attached to the inner panel 40, the projections 40d are in abutment against the back side of the screen 41 through a sponge 50, as shown in Fig. 17, so that a space is provided between both components. The V-shaped section 40a is covered by the black print section 41b of the screen 41, so that dust on the V-shaped section 40a or the drain groove 40b is invisible from the outside.

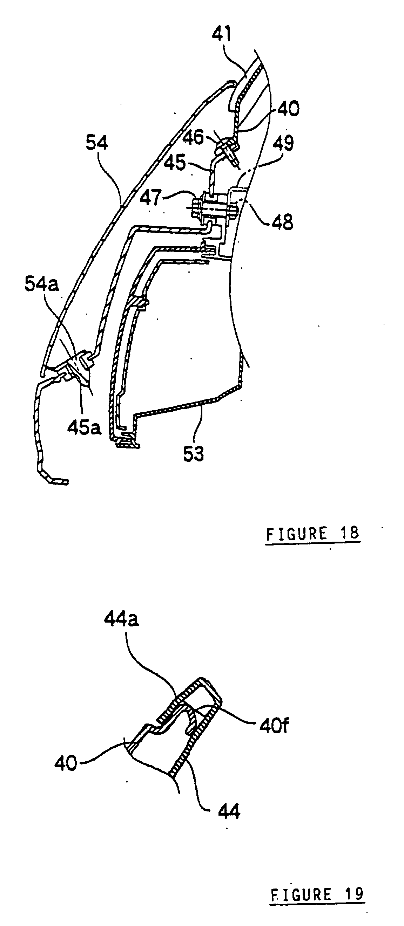

The inner panel 40 is attached to the vehicle body in such a manner that it is attached, as shown in Fig. 18, to a cowling 45 with screws 46 passing through the fitting holes 40c at the lower end thereof, and the cowling 45 is attached to stays 49 extending from the frame 5 with screws 47 and nuts 48. Although other fitting holes 40c are not shown in the figure, the inner panel 40 and the screen 41 are secured to a body member through stays or the like. Further, the engaging lips 40f on the upper end of the inner panel 40, as shown in Fig. 19, are fitted in receiving sections 44a of a meter cover 44.

Over a region from the lower end of the screen 41 to the upper side of a head lamp 53 is disposed a molding 54 forming the external surface of the vehicle body, and the upper edge of the molding 54 covers the screws 43 with which the screen 41 is attached to the inner panel 40.

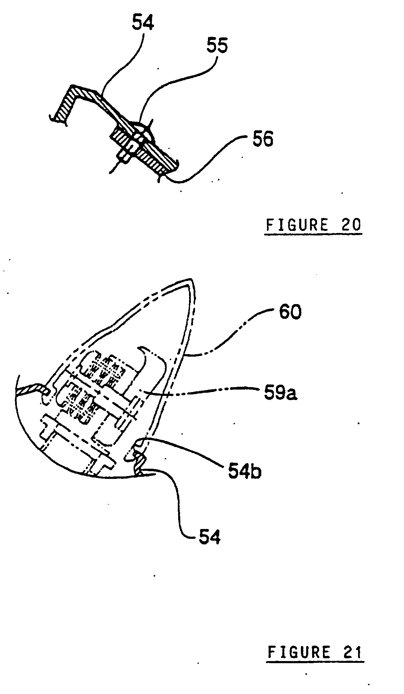

The molding 54, as shown in Fig. 18, is attached to the cowling 45 in such a manner that an engaging projection 54a formed on the lower central portion thereof is inserted in an insert hole 45a of the cowling 45. The upper ends on both sides of the molding 54 are attached to a leg shield 56 with screws 55, as shown in Fig. 20.

In the construction described above, when maintenance is performed of various components such as an air cleaner 34, valves of a meters 52, etc, two screws 55 of the molding 54 are removed, and the engaging projection 54a is pulled out to remove the molding 54. Thus, fitting sections (screws 43, etc) of the inner panel 40 will appear; then, a unit of the inner panel 40 and the screen 41 is removed by removing the screws 43 so that a service opening will appear; and thus maintenance of the various components is performed easily.

In addition, the screen 41 and the inner panel 40 can be removed as a unit, the number of fitting points of the screen 41 itself can be increased, ensuring rigidity, and the screen 41 can be extended downwardly, effecting increased size as well as improved moldability and good design.

Further, the inner panel 40 is formed with a drain groove 40b on its screen side surface, and since the drain groove 40b is configured such that water flowing down along the surface is led from the central portion to both sides of the screen 41 to be drained to openings of the head lamp 53, the water will not flow through the central portion between both head lamps, ensuring quality of external appearance. The formation of the drain groove 40b also provides improved rigidity of the inner panel 40.

Furthermore, the inner panel 40 is formed, vertically in the middle thereof, with a pair of projections 40d adapted to be in abutment against the back side of the screen 41, thereby preventing foreign matters from being collected in the clearance between the inner panel 40 and the screen 41 and effecting improved rigidity.

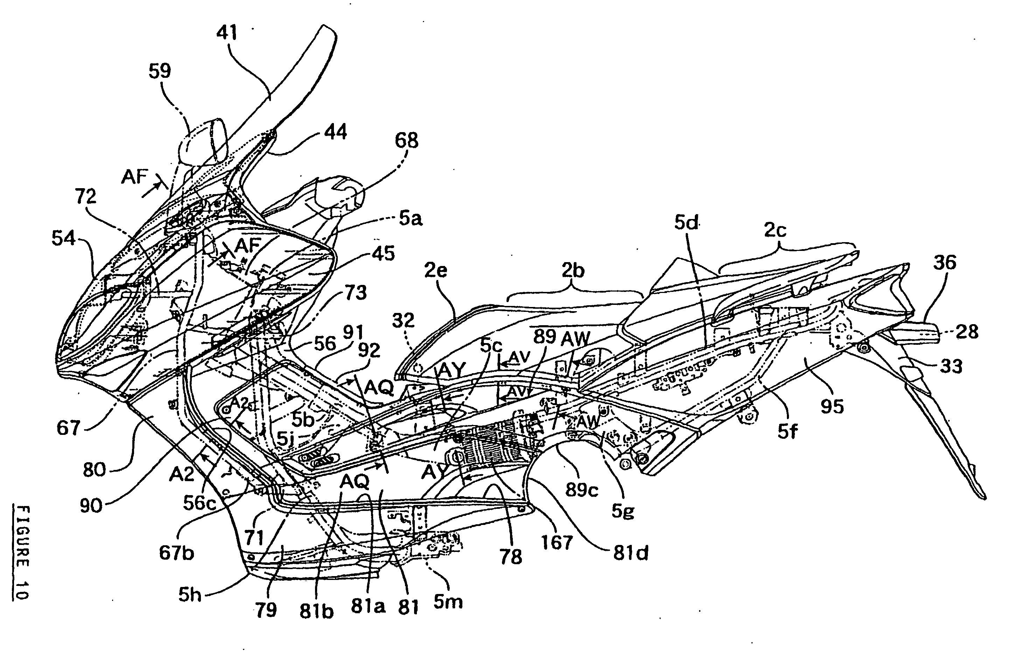

The molding 54, as shown in Fig. 10 and Fig. 21, is formed, at its upper part, with a mirror opening 54b, in which is inserted a post 59a of a back mirror 59, and between the peripheral edge of the opening 54b and the post 59a is provided a flexible mirror boot 60.

Thus, the back mirror 59 is supported reliably on the frame 5, and even if the back mirror post 59a is misaligned with the mirror opening 54b due to manufacturing or assembling errors, etc, the positional difference can be absorbed by the mirror boot 60.

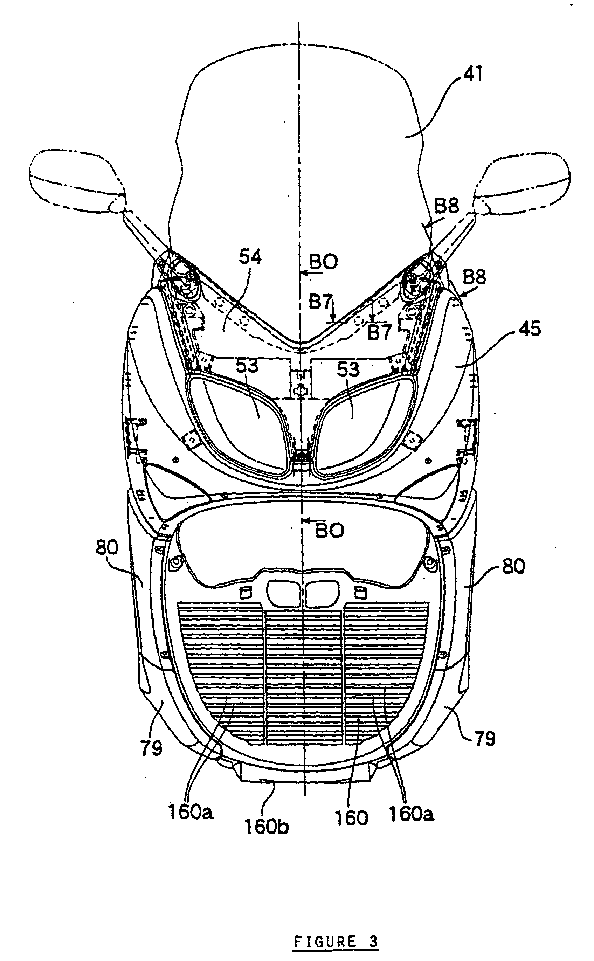

Further, the molding 54, as shown in Fig. 3, is formed, at its lower central portion, with a downwardly extending extension 54c, which is located in the middle of the double light type head lamp 53 and thus adapted to cover the space between both head lamps. Since the region above the head lamp 53 is covered by the molding 54, and the region below the head lamp 53 by the cowling 45, color tones can be differentiated between the cowling 45 and the molding 54, improving design quality, and if only the molding 54 is removed, visibility of the aiming adjustment section of the head lamp 53 is improved, improving serviceability etc.

On the other hand, at the front of the vehicle is provided the front fork pipe 14 as described above, and as shown in Fig. 11, Fig. 22 and Fig. 23, there are provided a main switch 53 between the inner tube 14a and the head pipe 5a, and a housing 64 outside the rotation range of the inner tube 14a.

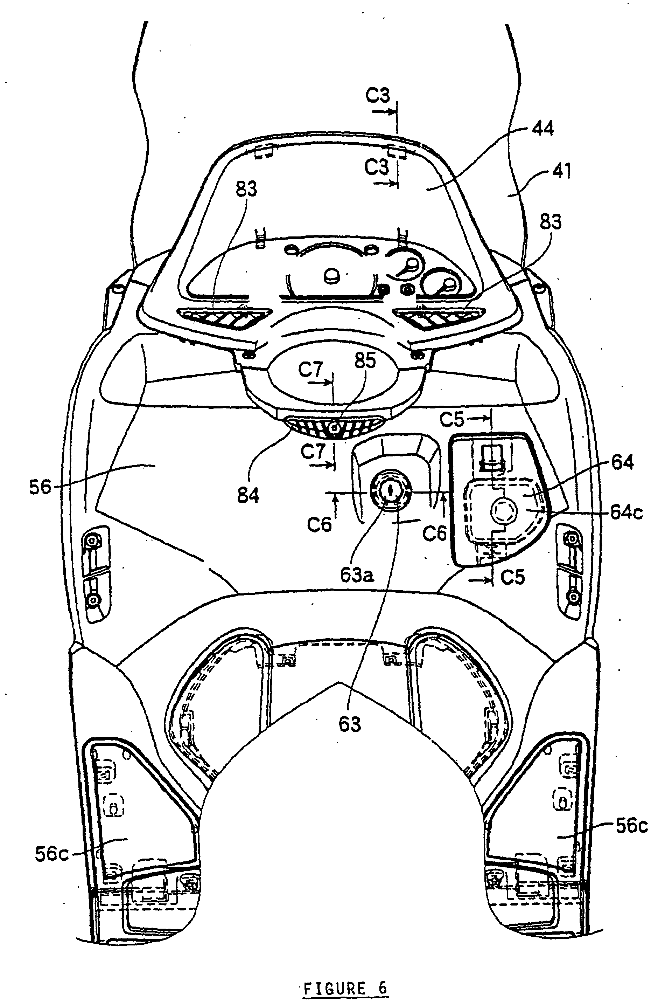

Specifically, the main switch 63, as shown in Fig. 6, Fig. 23 and Fig. 24, has a head 63a exposed from a switch opening 56a of the leg shield 56, and a main switch body 63b is attached to an unillustrated stay extending from the frame 5 (head pipe 5a) and held approximately horizontally in the longitudinal direction of the vehicle. The main switch 63 is disposed inside the rotation range of the inner tube 14a without interference with the inner tube 14a.

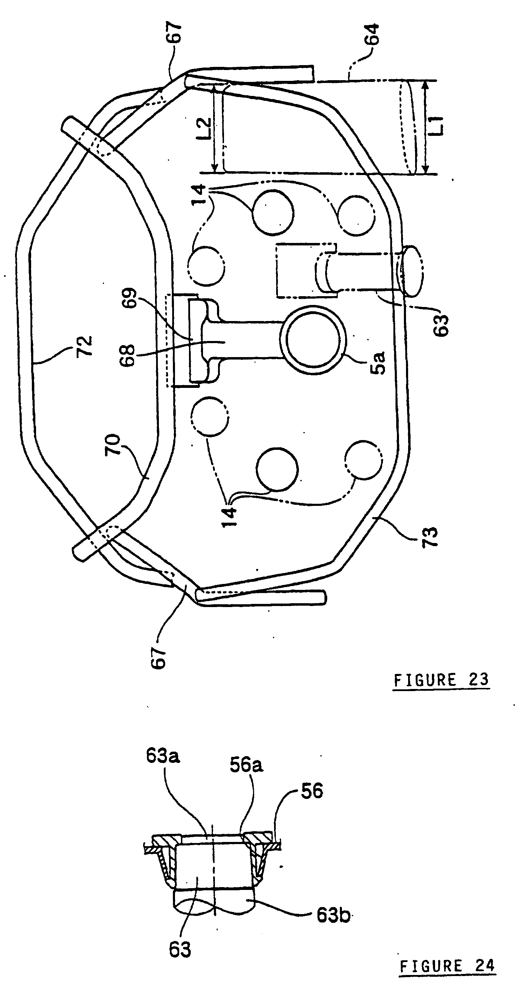

The housing 64, as shown in Fig. 6, Fig. 23 and Fig. 25(a), is comprised of a box-like housing body 64a, and a lid 64c for opening and closing a mouth 64b of the housing body 64a. The housing body 64a is formed integral with the leg shield 56 and approximately horizontal in the longitudinal direction of the vehicle, and as shown in Fig. 23, it has a dimension L1 of the mouth 64b longer than a dimension L2 of its depth. In other words, the dimension L1 of the mouth 64b is sized wider than the dimension L2 of the depth in connection with the rotation range of the inner tube 14a, which allows the housing body 64a to have a largest possible housing capacity.

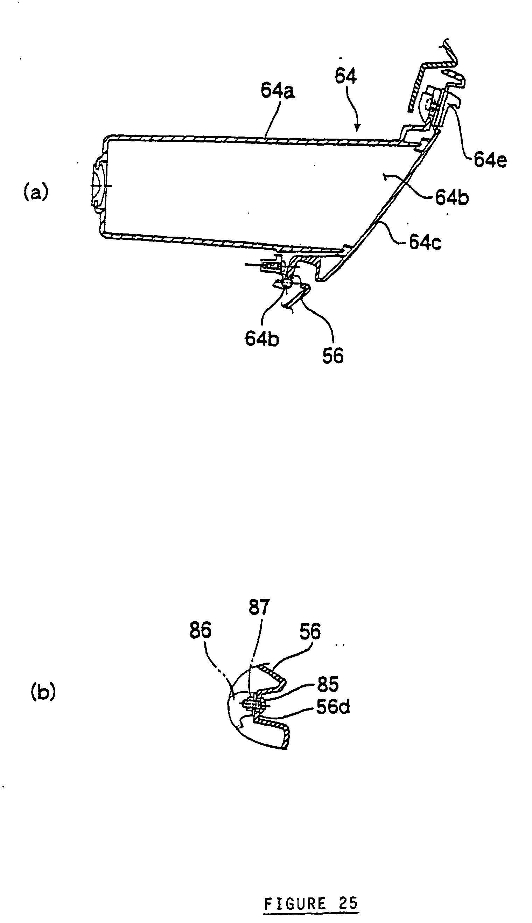

The lid 64c, as shown in Fig. 25(a), is supported pivotally on a hinge 64d provided at the lower end thereof, and turning of a locking knob 64e causes the lid 64c to be locked and unlocked.

In the construction described above, in which a rotatable inner tube 14a is provided at the front of the vehicle, the housing 64 and the main switch 63 can be disposed without interference with the inner tube 14a, and the provision of the housing 64 can expand the entire housing space in the vehicle.

In addition, the housing 64 is disposed outside the rotation range of the inner tube 14a, so that the mouth 64b of the housing 64 can be made wide without interference with the inner tube 14a, providing enlarged housing capacity.

Although in this embodiment, the housing 64 is disposed outside the rotation range of the inner tube 14a, and the main switch between the head pipe 5a and the inner tube 14a, this positional relation may be reversed, or two housing sections may be disposed outside the rotation range of both inner tubes. The frame 5 is provided, at the front of the vehicle, with laterally projecting cowl stays 67.

That is, as shown in Fig. 11 and Fig. 12, a stay 68 is fixed to the head pipe 5a, and to the stay 68 is fixed a laterally extending L - R extension pipe 70 through a bracket 69. To the opposite ends of the L - R extension pipe 70 are connected the upper ends 67a of the cowl stays 67 in the shape of a loop, and the lower ends 67b of the cowl stays 67 are fixed to the lower frame 5h through brackets 71. To the pair of cowl stays 67 are connected, vertically in the middle thereof, a front horizontal pipe 72 bent forwardly and disposed approximately horizontally, and a rear horizontal pipe 73 bent rearwardly and disposed approximately horizontally.

These cowl stays 67 are disposed outside the rotation range of the inner tube 14a, and the front and rear horizontal pipes 72, 73 are disposed surrounding the inner tube 14a outside the rotation range thereof.

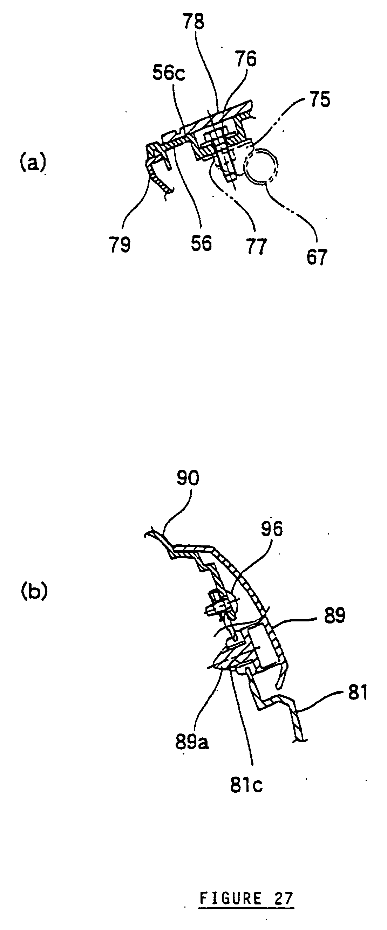

On the cowl stays 67 and the front and rear horizontal pipes 72, 73 are mounted a various parts (air cleaner 34 and head lamp 53), and to the cowl stays 67 are attached the cowling 45, and as shown in Fig. 27(a), foot rests 56c of the leg shield 56.

The outside front fork pipes 14 are disposed between the cowl stays 67 fixed to a body frame 5. Said cowl stays 67 are supporting the cowling 45 and several further elements, such as the air cleaner 34 and the head lamp 53. Said cowl stays (67) are attached to foot rests (56c) of the vehicle for carrying a load of the foot rests (56c). Said cowl stays 67 are in the shape of a loop extending on both sides of the vehicle and are fixed, at their upper and lower ends (67a, 67b), to said body frame (5) by further elements.

Specifically, as shown in Fig. 27(a), to the cowl stay 67 is fixed a bracket 75, to which is attached, with a bolt 76 and a nut 77, the foot rest 56c of the leg shield 56, on which is provided a foot rest mat 78. Numeral 79 in Fig. 27(a) designates a side panel covering the side of the vehicle under the foot rest 56c.

The foot rest 56c of the leg shield 56 adjoins a foot rest 81a of a foot board 81, and the foot rest mat 78 is placed over the adjoining foot rests 56c, 81a.

The cowl stay 67 is thus disposed outside the front fork pipe 14, so that load on the foot rest 56c can be carried by the cowl stay 67 in an optimum location, and the cowling 45 can be supported appropriately. Therefore, there is no need for a long stay extending from the frame 5, effecting size reduction and weight saving of the frame 5 as a whole.

In addition, although adequate support for various components is difficult at the front of the vehicle because of rotation of the front fork pipe 14, the cowl stays 67 and pipes 70, 72, 73 are disposed at positions outside the front fork pipes 14 without interference, so that these components can be supported easily on the cowl stays 67 or the like.

Further, as shown in Fig. 6, downwardly of the screen 41 are disposed a meter cover 44 or a cover member facing the rider, and the leg shield 56. The meter cover 44 is formed with two air induction holes 83 on the left and right sides, and another air induction hole 84 is also provided in the upper part of the leg shield 56 laterally centrally of the vehicle.

Specifically, the leg shield 56, as shown in Fig. 25(b), is formed with a recess 56d at a position where the air induction hole 84 is formed, and in the bottom of the recess 56d is formed the air induction hole 84 with a louver. At the bottom of the recess 56d is disposed a fitting screw 85, which is fitted in a nut 87 of a stay 86 extending from the frame 5 when the bottom of the recess 56d is attached to the stay 86.

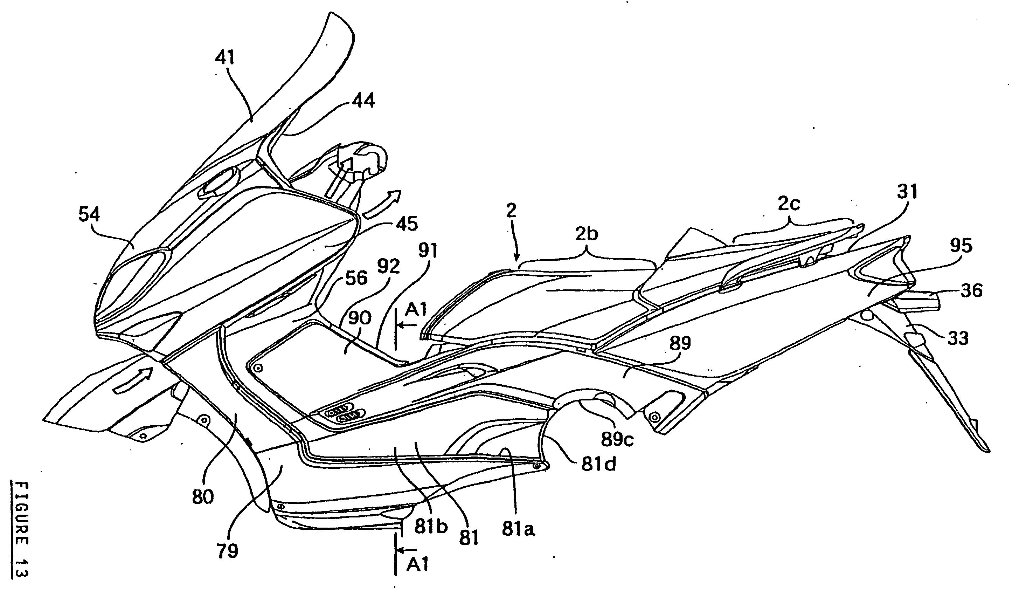

In the construction described above, when the vehicle is running, a running wind flowing from the front into the space inside the inner panel 40 and the molding 54 as shown in Fig. 13 by an arrow, is introduced through the air induction holes 83, 84 to the rear side of the screen 41 as shown by an arrow. Thus, flow stabilizing effect can be produced, so that an increase in negative pressure inside the screen 41 can be prevented, avoiding wind noises and turbulent wind flow.

The leg shield 56 is formed with the recess 56d, and the air induction hole 84 and the fitting screw 85 are arranged in the recess 56d, so that the number of recesses and holes in the surface of the leg shield 56 can be decreased because of the hole and the screw not being arranged separately as in the prior art, improving quality of external appearance.

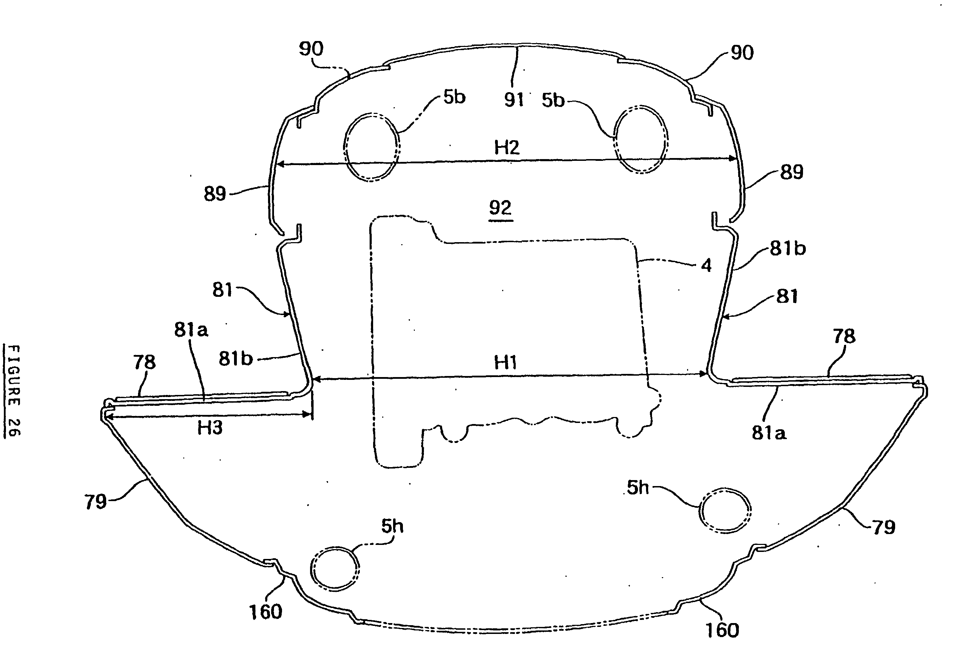

On the other hand, the foot board 81, as shown in Fig. 26, has the foot rest 81 a disposed approximately horizontally, and a vertical wall 81b extending upwardly from the inside edge of the foot rest 81a. The pair of left and right vertical walls 81b are inclined slightly outwardly toward the top ends thereof. Above the vertical walls 81b are provided boomerang covers 89, side covers 90 and an upper cover 91, so that an upwardly bulged center tunnel 92 is formed by a plurality of vertically divided cover members. The center tunnel 92, as shown in Fig 26, has a width H2 at the upper part wider than a width H1 at the lower end. Numeral 160 designates an inner fender.

Inside the center tunnel 92 is disposed the engine 4, and at the upper part thereof, the upper frame 5b penetrate it.

In the space below the foot rests 81 a of the foot boards 81 are disposed the lower frame 5h, an unillustrated recovery tank and water pipes.

The center tunnel 92 is formed such that its width H2 at the upper part is wider than the width H1 at the lower part thereof, so that even an engine 4 with a bulgy head can be disposed spacially efficiently, and the vehicle width is kept small while securing an adequate foot rest space H3, providing easy footing as well as improved design. In addition, pressing action by the rider's leg against the wide upper portion of the center tunnel 92 provides improved gripping quality.

Further, in the center tunnel 92 are provided the carburetor 38, intake duct 35, etc, and at the position where the carburetor 38 is disposed, are disposed the upper frame 5b and the lower frame 5h passing through the tunnel 92, at the upper and the lower side of the carburetor 38, respectively. Since the center tunnel 92 is formed by a plurality of vertically divided covers, any of these covers can be easily removed, providing improved serviceability. Further, the upper frame 5b and the lower frame 5h are disposed at the upper and the lower side of the carburetor, respectively, so that the rigidity of the center tunnel around the carburetor 38 can be improved.

In addition, a panel 80 is provided separate from the cowling 45, so that if the panel 80 on the right side of the vehicle as seen from the rear, is removed, a filler cap 155b of a filler pipe 155a extending from a radiator 155 is exposed, providing easy replenishment of cooling water.

In addition, as shown in Fig. 13, the foot board 81 extends to the region under the seat 2, while at a short distance below the seat 2 is disposed a seat underside cover 95. Between the seat underside cover 95 and the foot board 81 is provided the boomerang cover 89 which is an exterior component extending approximately horizontally in the shape of a so-called boomerang. As can be seen in Fig.1 said boomerang cover 89 has a convex-shape substantially within a vertical plan extending in longitudinal direction. The middle part of said boomerang cover 89 is upwardly positioned close to the seat 2 of the vehicle, in particular under from the rider's seat 2b. Said middle part of said boomerang cover 89 constitutes a curved section and a front part and a rear part of the boomerang cover 89 extends from said middle part in downward direction, respectively. In particular the front part substantially extends in direction to the axle of the front wheel 20 and the rear part substantially extends in direction to the axle of the rear wheel 10.

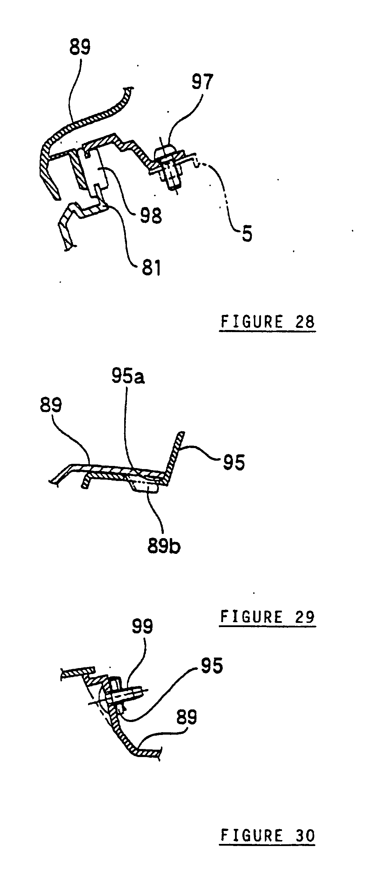

The boomerang cover 89, made of a plastic, is attached to the foot board 81. That is, as shown in Fig. 27(b), it is formed with a pin 89a, which is fitted in a fitting hole 81c of the foot board 81. A plurality of pins 89a are formed at other locations for fitting. The ends of the foot board 81 and the side cover 90 are connected with a screw 96. Further, as shown in Fig. 28, the foot board 81 is fixed to the frame 5 with a screw 97, and to the foot board 81 is attached the boomerang cover 89 through a grommet 98. Furthermore, as shown in Fig. 29, on the boomerang cover 89 is formed an engaging projection 89b, which is inserted in an engaging hole 95a to be engaged. The same fitting structure is adopted at a plurality of other locations. Further, as shown in Fig. 30, the boomerang cover 89 is attached to the seat underside cover 95 with a screw 99.

In the construction described above, between the foot board 81 and the seat underside cover 95 is provided the boomerang cover 89 extending approximately horizontally in the shape of approximately a boomerang, so that if the color or the material of the boomerang cover 89 is changed, the boomerang cover 89 serves to be an accent as an exterior component, increasing the degree of freedom in designing.

In addition, the upper edge of the foot board 81 and the lower edge of the seat underside cover 95 are covered by the boomerang cover 89, so that accuracy of alignment of these components can be improved and the fitting sections of the boomerang to the foot board 81 and the seat underside cover 95 can be hidden, improving quality of external appearance.

Further, if the boomerang cover 89 is removed, maintenance of equipment disposed inside the boomerang cover can be performed easily. In particular, since the boomerang cover 89 extends in longitudinal direction of the vehicle, a plurality of components placed along the longitudinal axes of the vehicle can be easily reached by removing said boomerang cover 89 only. Thus several maintenance and service actions can be carried out under low work load and with low costs. Furthermore, since the boomerang cover 89 is provided between the foot board 81 and the seat underside cover 95 and have a relatively low width, there is no need the remove a large side cover for carrying out simple service action. The specific shape of the boomerang cover 89 allows an easy handling of the same if it is removed. Thus, there is a low risk to damage same during maintenance.

Furthermore, since the boomerang cover 89 is provided between the foot board 81 and the seat underside cover 95 a plurality of components are provided for the side cover means. Thus, in case of a minor accident not the entire side cover means needs to be replaced, but only the damaged part. Thus maintenance cost will be reduced.

Although in this embodiment, the boomerang cover 89 is used as an "exterior component", this invention is not limited to that, and part of the frame 5 may be utilized.

Also, as shown in Fig. 1, the foot board 81 and the boomerang cover 89 as cover members are formed with cutouts 81d, 89c each forming part of an arc, respectively at the rear end and the lower rear end. The side surface of the crank case 4a of the engine 4 is exposed to the outside through the cutouts 81d, 89c, and the side surface of the crank case 4a is flush with the surfaces around the cutouts 81 d, 89c.

The engine 4, as described above, is fixed to the frame 5, and the crank case 4a of the engine 4 is located downwardly of the seat 2 for the rider. A crank shaft 4c provided in the crank case 4a, as shown in Fig. 7, is disposed approximately centrally of the wheel base of the vehicle.

As described above, the cutouts 81d, 89c are formed in the foot board 81 and the boomerang cover 89 covering the engine 4, respectively, and the side surface of the crank case 4a is exposed to the outside through the cutouts 81d, 89c, effecting rider's easy footing during stoppage of the vehicle.

That is, when the engine 4 is fixed to the frame 5, the engine 4 is located downwardly of the rider's seating position, and the crank case 4a becomes the widest portion of the engine 4. Therefore, if the whole side of the crank case 4a of the engine 4 is covered by the foot board 81 and the boomerang cover 89, the vehicle width becomes large, which impairs easy footing characteristics. On the other hand, if the foot board 81 and the boomerang cover 89 are provided with cutouts 81d, 89c through which the crank case 4a is exposed, the width of the crank case 4a of the engine 4 and that of the foot board 81 and the boomerang cover 89 can be set at approximately the same value, so that the vehicle width of the portion around which the rider's foot touches the ground, can be made small, effecting easy footing as well as improved design.

In addition, the crank case 4a of the engine 4 can be thus exposed to the outside through the cutouts 81d, 89c, so that the crank case 4a is exposed directly to the running wind, improving cooling capacity.

Under the seat 2 are disposed the container box 29 and the fuel tank 27 supported on the frame 5, and in front of the container box 29 is disposed the fuel tank 27. A top opening 29a of the container box 29 is located below the top surface 27a of the fuel tank 27.

The seat 2, as shown in Fig. 10, etc, is mounted pivotally on a hinge 2a, and comprised of a rider's seat 2b for a rider and a co-rider's seat 2c for a co-rider. At the rear end of the seat 2 is provided a locking device for securing the closed condition of the container box 29. The rear end of the seat 2 is at a position forwardly of the rear axle 112 and thus the co-rider's sitting position is advanced, so that the co-rider is able to change his or her posture easily in association with the movement of the vehicle, improving togethemess with the rider.

As described above, the top surface 27a of the fuel tank 27 is at a position above the top opening 29a of the container box 29, securing adequate housing capacity.

That is, in a seat 2 with a large entire length and extending forwardly from the rider's seat 2b, the front of the seat 2 is rarely used as a seating section, so that a little high seat and a thin cushion can be acceptable. Therefore, if the fuel tank 27 is disposed at this location, the top surface 27a of the fuel tank 27 can be positioned higher than the top opening 29a of the container box 29, securing adequate capacity of the fuel tank 27.

In addition, the top opening 29a of the container box 29 is located at a low position, which facilitates baggage handling, and the container box 29 is disposed behind the fuel tank 27, under the wide rider's seat 2b of the seat 2, which allows a wider container box 29, securing adequate housing capacity.

Further, the top opening 29a of the container box 29 under the rider's seat 2b is located at a low position, so that the seating surface of the rider's seat 2b is set at a low position while adequate cushion thickness of the seat 2 can be secured, providing easy footing and improved cushioning.

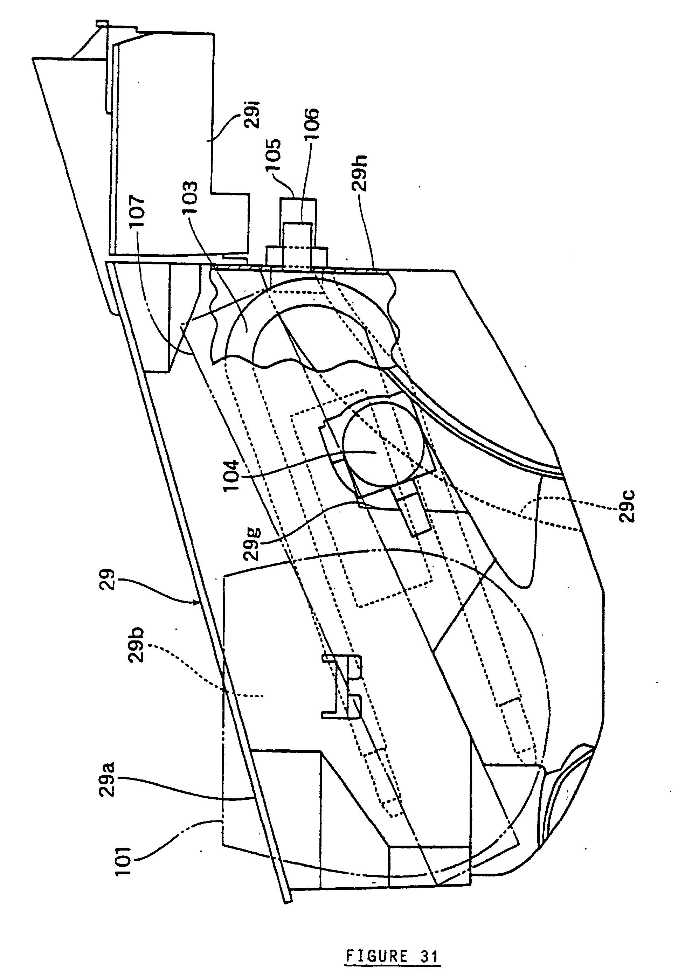

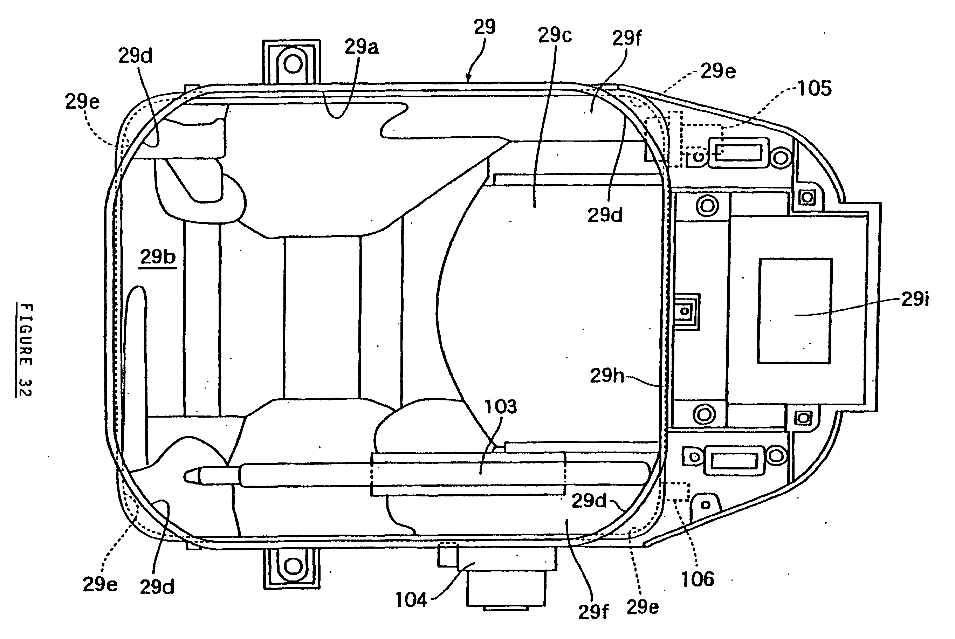

The container box 29, as shown in Fig. 31 and Fig. 32, is formed with a helmet storage section 29b in which a helmet 101 can be stored upside down in a laterally-placed fashion (with the longitudinal axis of the helmet along the lateral direction of the vehicle). The helmet storage section 29b is formed at a position corresponding to the widest portion of the seat 2, and the bottom of the helmet storage section 29b is at a position where a valley-like space is defined by the engine 4 and the rear wheel 10.

The container box 29 is formed, at the rearward bottom, a wheel house section 29c, which has a raised portion laterally centrally of the vehicle for prevention of interference with the rear wheel 10 moving vertically.

The seat 2 is formed smaller in width toward the front, that is, it is formed larger toward the rear from the viewpoint of easy boarding, and the helmet storage section 29b is formed at this wider portion, so that the helmet 101 can be stored in the laterally-placed fashion. Thus, the container box 29, which makes good use of the seat configuration, allows shorter longitudinal vehicle length while securing storage space.

In addition, the container box 29, as shown in Fig. 32, has a top opening 29a in the shape of approximately a square with opening corners 29d of a large radius of curvature, and lower corners 29e located below the upper opening 29a have a radius of curvature smaller than that of the opening corners 29d, so that the sectional area of the container box is larger toward the bottom than the area of the upper opening 29a.

Thus, the rider's seat 2b of the seat 2 covering the upper opening 29a can be made smaller in width, improving footing characteristics, and the container box 29 can be made larger toward the bottom in its sectional area, improving storage capacity. In addition, the upper opening 29a is narrower and thus the sealing length of the periphery of the opening is shorter, effecting improved sealability.

Further, the container box 29 has the wheel house section 29c formed at the bottom as a recess for the rear wheel 10, so that the position of the container box 29 can be lowered, improving footing characteristics as well. Furthermore, recessed portions 29f on both sides of the wheel house section 29c accommodate a U lock 103 or other unillustrated tools, improving storage capacity.

In addition, the container box 29 is formed, at one side thereof, with a mounting section 29g for an alarm immobilizer 104. The mounting section 29g has a shape recessed in the side of the box to approximately match the immobilizer 104. Therefore, a user is able to mount the alarm immobilizer 104 to the mounting section 29g without need of considering where to mount, facilitating user's mounting work.

Further, on the rear side wall 29h is provided a DC outlet 105, which allows electric devices such as portable phones to be charged within the container box 29. The DC outlet 105 is located laterally of the wheel house section 29c near a lower corner 29e of the container box 29 below the top surface of the wheel house section 29c.

The DC outlet 105 is disposed in a charging system adapted to be activated during engine operation, and arranged such that electric power to the outlet 105 is shut off except when the vehicle is running.

On the other side of the wheel house section 29c from the DC outlet 105 is provided a lighting device 106 for lighting the interior of the container box 29. The lighting device 106 is also disposed below the top surface of the wheel house section 29c.

As described above, the DC outlet 105 is provided on the side wall of the container box 29, so that electrical devices placed in the container box 29 can be charged during running in a water-tight and locked condition, that is, without influence from the outside environment.

Further, the DC outlet 105 and the lighting device 106 are disposed below the top surface of the wheel house section 29c, preventing interference of these devices with bags 107 or the like stored in the container box 29.

Furthermore, the DC outlet 105 is disposed on the rear side wall 29h of the container box 29 near the lower corner 29e, so that the comer space can be utilized effectively in charging operation.

Moreover, the DC outlet 105 and the lighting device 106 are disposed separately on the left and right sides of the wheel house section 29c, providing good space efficiency and manipulability compared with when both components are disposed on one side, and lighting is not blocked off by electric parts connected to the DC outlet 105, ensuring good lighting performance.

Also, the container box 29 is formed, at the upper rear end, a battery housing 29i; and approximately the forward half of the upper surface of the battery 30 housed in the battery housing 29i, is covered by the rear end portion of the seat 2, and approximately the rearward half of the upper surface of the battery 30 is covered by a tail cover 31.

The fuel tank 27 has a fuel cap 27b at the top surface 27a, which is covered by the opening/closing lid 2e provided on the seat 2. The opening/closing lid 2e is opened and the fuel cap 27b is removed in the case of refueling.

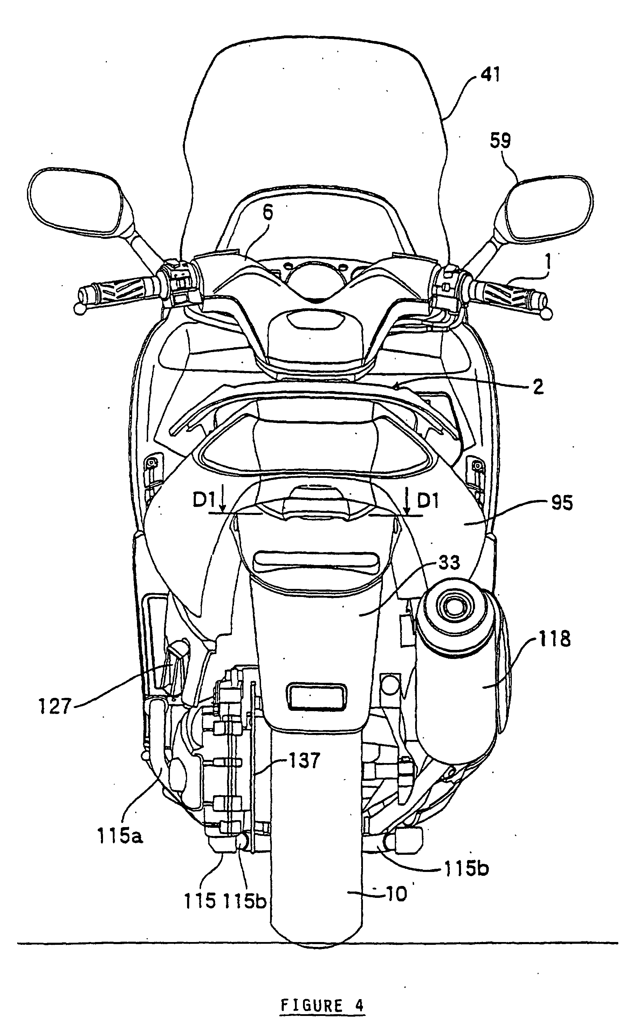

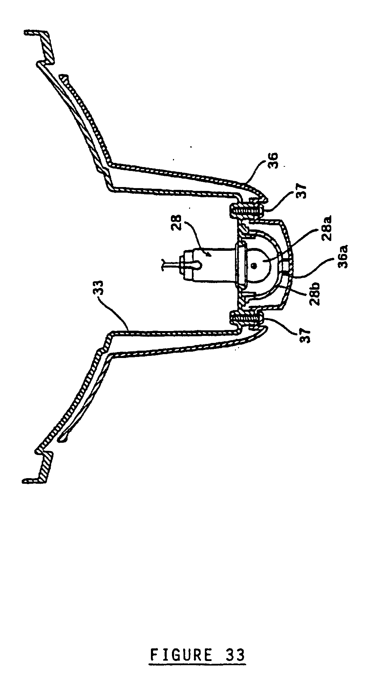

On the rear end of the vehicle, as shown in Fig. 4 and Fig. 33, is provided a license bracket 33 for a license plate or the like, and on the license bracket 33 is provided a license lamp 28 for lighting the license plate. The license lamp 28 is arranged such that a bulb 28a is attached to the license bracket 33, to the rear of the bulb 28a is disposed a lens 28b covering the bulb 28a, and to the rear of the lens 28a is disposed a license lamp cover 36 covering the lens 28a. The license lamp cover 36, as shown in Fig. 33, is attached to the license bracket 33 with screws 37, and the lens 28b is held by a pushing projection 36a formed on the license lamp cover 36 for pushing the lens 28b. This allows reduced fitting workhours for the lens 28b.

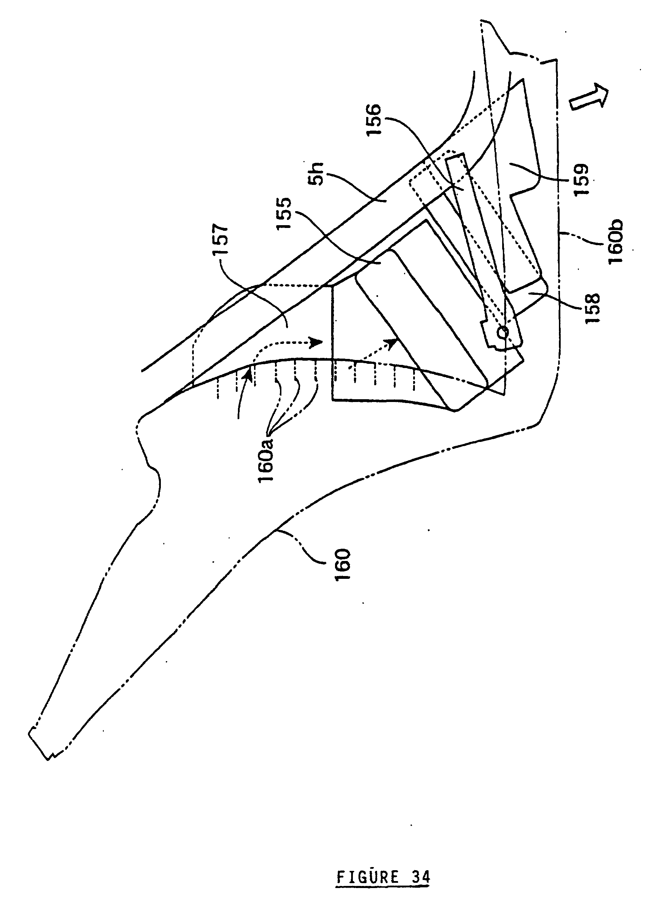

On the other hand, the engine 4 is of a water-cooled type, at both sides of the engine are provided left and right foot rests 56c, and under the foot rest surfaces of both foot rests 56c is disposed a radiator 155 between the front wheel 20 and the engine 4. The radiator 155, as shown in Fig. 34-Fig. 36, has the shape of a flat rectangular body oriented with its longitudinal axis along the lateral direction of the vehicle, bent rearwardly at the central portion thereof, inclined slightly rearwardly so as to be directed obliquely upwardly, and fixed to the lower frames 5h through mounting stays 156. The mounting stays 156 extend obliquely forwardly and downwardly from the lower frames 5h, and on the upper sides of the mounting stays 156 is mounted the radiator 155 to be supported.

Thus, the mounting stays 156 are disposed under the radiator 155, so that the radiator 155 is protected by the mounting stays 156.

In addition, in front of the radiator 155 is provided a wind induction plate 157 for introducing winds to the radiator 155, while to the rear of the radiator 155 is disposed a fan 158 for introducing the outside air to the radiator 155, and under the fan 158 is disposed a shroud 159.

In front of the radiator 155 is provided an inner fender 160, which is formed with wind induction louvers 160a for introducing winds to the radiator 155. The wind induction louvers 160a prevents any mud and water splashed by the front wheel 20 from entering the radiator because of its vanes being disposed approximately horizontally.

Air through the radiator 155 passes through the shroud 159 and discharged to the outside of the vehicle through wind openings 160c provided in the bottom 160b of the inner fender 160.

The engine 4 is a water-cooled four-stroke engine, in which driving force from a piston is transmitted through the crank shaft 4c and the dry type V-belt speed changer to a clutch mechanism, and the driving force from the clutch mechanism is transmitted through a reduction gear mechanism to a secondary transmission 109 provided inside the rear arm 8.

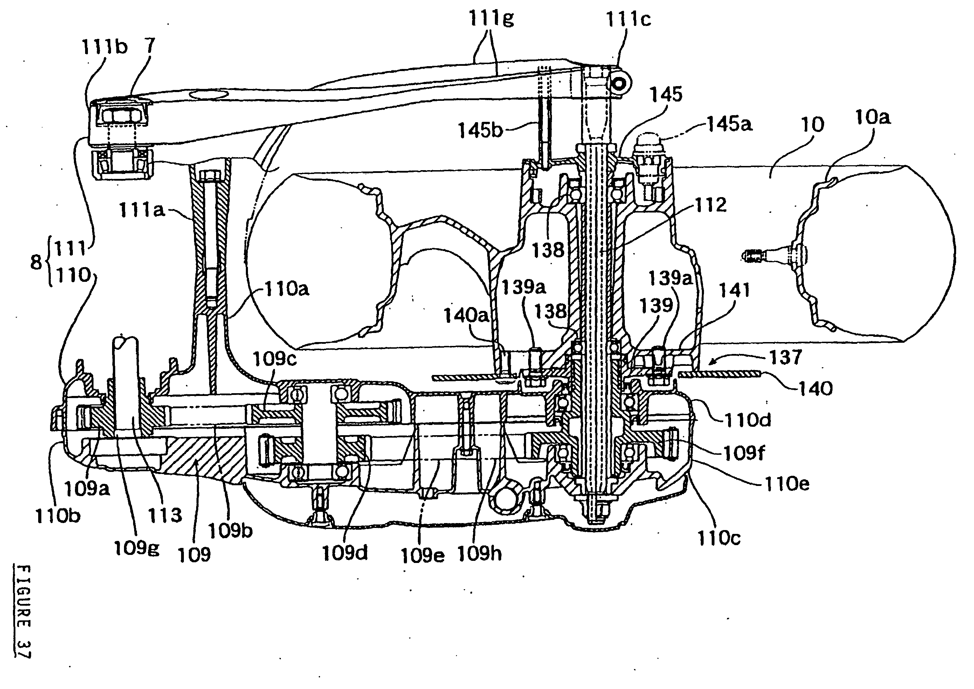

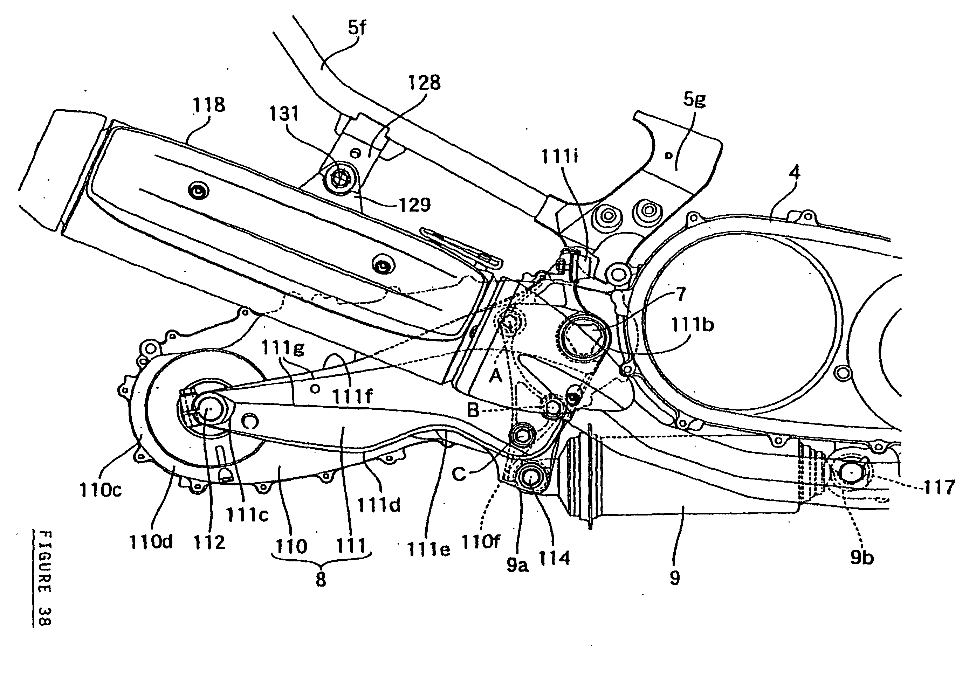

Specifically, the rear arm 8, as shown in Fig. 37, is divided into two sections, a left division 110 and a right division 111; mounting bosses 110a, 111a extend from the respective divisions 110, 111; and they are in abutment against each other to be fixed together at three points (A, B and C), as shown in Fig. 38. The mounting bosses 110a, 111a are disposed in a space between the rear wheel 10 and the drive shaft 46 of the engine 4.

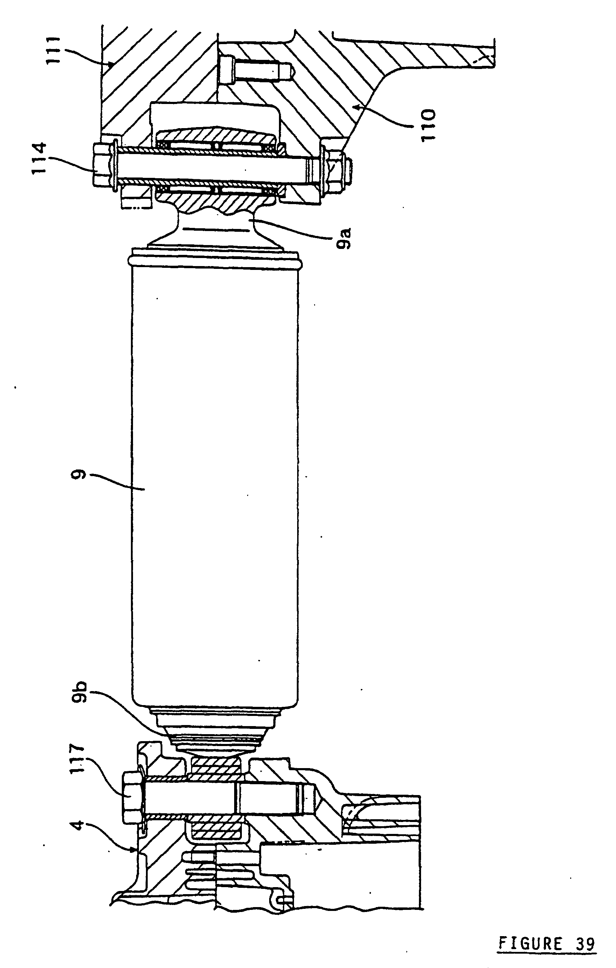

The rear cushion 9, as shown in Fig. 39, is mounted pivotally, at its rear end 9a, to the rear arm 8 with its rear end sandwiched by the left and right divisions 110, 111, with a bolt 114, and at its forward end 9b, also pivotally to the engine 4 with a bolt 117.

The forward ends 110b, 111b of both divisions 110, 111 are connected to the crank case 4a through divided pivot shafts, respectively, and the rear ends 110c, 111c to the rear wheel 112.

The secondary transmission 109, as shown in Fig. 37, has a first sprocket 109a fixed to an output shaft 113; the first stage of speed reduction is performed by the first sprocket being connected through a first silent chain 109b to a second sprocket 109c; and the second stage of speed reduction is performed by a third sprocket 109d being connected through a second silent chain 109e to a fourth sprocket 109f, said third sprocket 109d being adapted to rotate with the second sprocket 109c coaxially and disposed outwardly of the second sprocket 109c.

The secondary transmission 109 has a forward gear train 109g located laterally inwardly of a rearward gear train 109h.

The left division 110 is comprised of a right case half 110d and a left case half 110e mated together liquid-tightly with lubricating oil held therein.

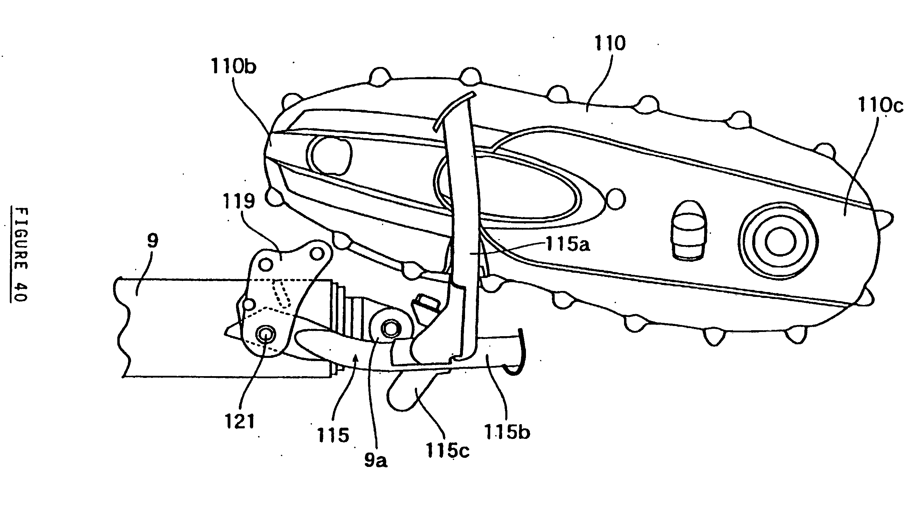

In the secondary transmission 109 as described above, since the forward gear train 109g of a two-staged drive chain type is located laterally inwardly of the rearward gear train 109h, an open space can be formed for a foot bar 115a of a main stand 115 located at a position corresponding to the forward gear train, outside the case (see Figs. 40, 41 and 42). Therefore, the foot bar 115a of the main stand 115 can be disposed further laterally inward than in the prior art, thereby securing a bank angle for an appropriate cornering posture.

As a result of the rearward gear train 109h being disposed laterally outwardly of the forward gear train, easy arrangement is effected of a brake disk 140 of a disk brake 137 or the like located between the rearward gear train 109 and the rear wheel 10.

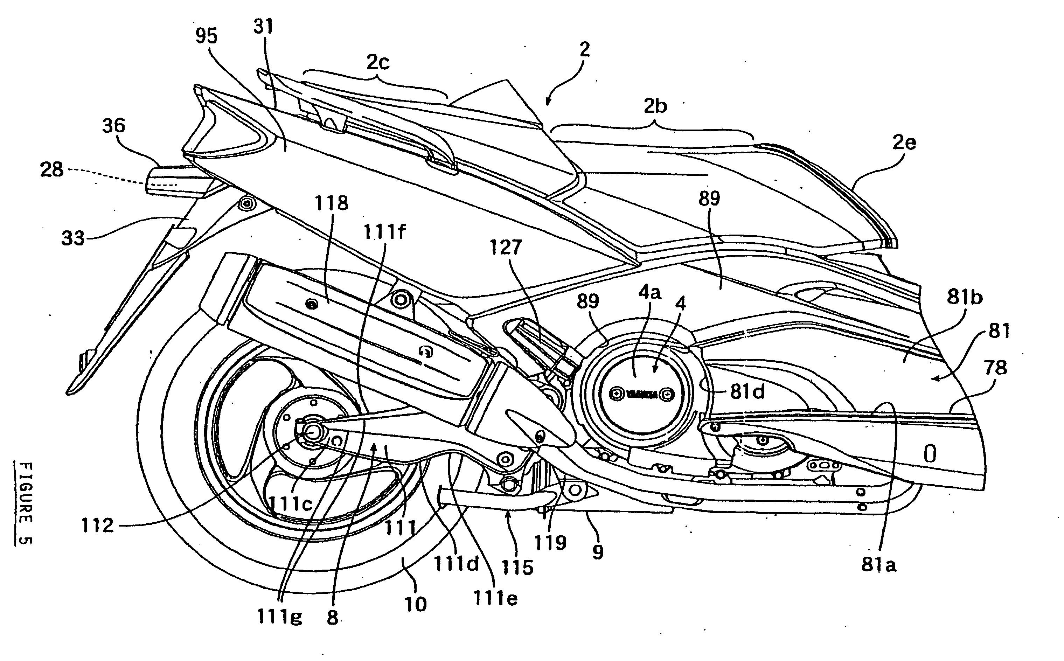

On the other hand, the right division 111, as shown in Fig. 5 and Fig. 38 in profile, has the shape of approximately a letter S, and it is formed with a downwardly opening recess 111e for the main stand 115 in the lower edge 111d, the upper edge 111f thereof being inclined gradually downwardly toward the rear end 111c.

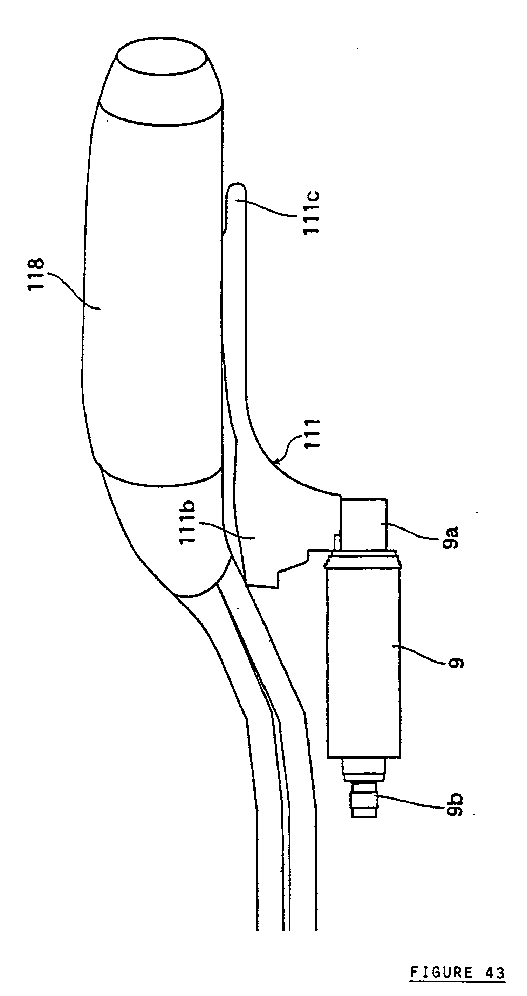

The right division 111, as shown in Fig. 43 in top plan, has a forward end 111b located on the inner side of the vehicle and extends rearwardly and gradually outwardly toward the rear end 111c.

As described above, since the right division 111, as shown in Fig. 5 in profile, has an downwardly opening recess 111e for the main stand 115 in the lower edge 111d, even if the right division 111 makes swinging movements during running, an open space can be secured for the main stand 115, and since the upper edge 111f is formed such that it is inclined gradually downwardly toward the rear end 111c, an open space can be secured for the muffler 118 extending obliquely upwardly at the outer side of the right division 111, and effective arrangement can be achieved without interference between components.

Also, since the right division 111, as shown in Fig. 43 in top plan, has the forward end 111b located in the inner side of the vehicle and extends rearwardly and gradually upwardly toward the rear end 111c, the muffler 118, which extends obliquely upwardly toward the rear, passes by the outside of the forward end 111b of the right division 111 and then above the rear end 111c, resulting in a further simplified arrangement of the muffler 118.

In addition, the right division 111 has a twisted shape with a smooth curve, and is formed with a plurality of ribs lug in the longitudinal direction, thereby improving rigidity.

Further, the right division, as shown in Fig. 38, is provided with an elastic member or a bump stopper 111 i above the pivot shaft 7. If the right division 111 makes a large upward swinging movement about the pivot shaft 7 against the tension of the rear cushion 9, the bump stopper 111 i is brought into contact with an rigid engine suspension section of the frame 5 to stop the upward movement.

Furthermore, the left and right divisions 110, 111 are spaced closer to each other at the forward ends 110b, 111b than at the rear ends, and provided, at these ends 110b, 111b, with mounting bosses 110a, 111a, respectively, resulting in shorter mounting bosses 110a, 111a.

Moreover, mud guards 110f, 111h formed integral with the mounting bosses 110a, 111a, fulfil a mud guard function for the rear cushion. Further, the bosses 110a, 111a have a shape with a vertically wide dimension, and are fastened at three points, thereby ensuring rigidity, and they are fastened in the vicinity of the pivot shaft 7, thereby effecting stabilized pressure on the bearings mounted to the pivot shaft 7.

On the other hand, as shown in Fig. 37, the rear wheel 10 is mounted on a stationary rear axle 112 for rotation; to a wheel cast 141 of the rear wheel 10 is fixed a clutch hub 139 with bolts 139a; the secondary transmission 109 and the clutch hub 139 are connected through a spline section; and driving force from the secondary transmission 109 is transmitted through the clutch hub 139 to the rear wheel 10.

To the wheel cast 141 of the rear wheel 10 is fixed the brake disk 140 with bolts 140a.

Further, on the left division 110 is provided a caliper 143 of the disk brake 140, and pads on the caliper 143 are adapted to hold the brake disk 140 therebetween to produce braking force.

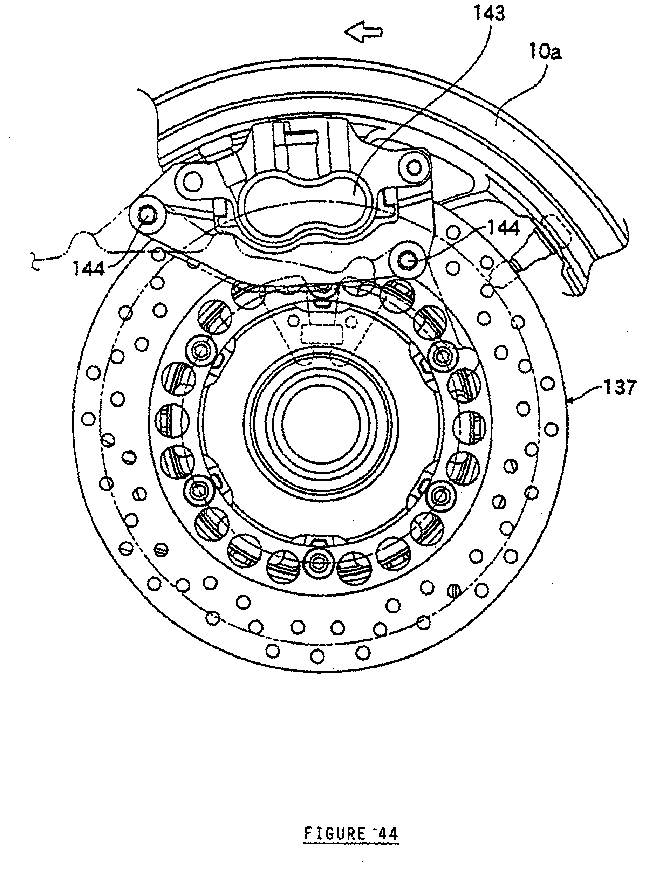

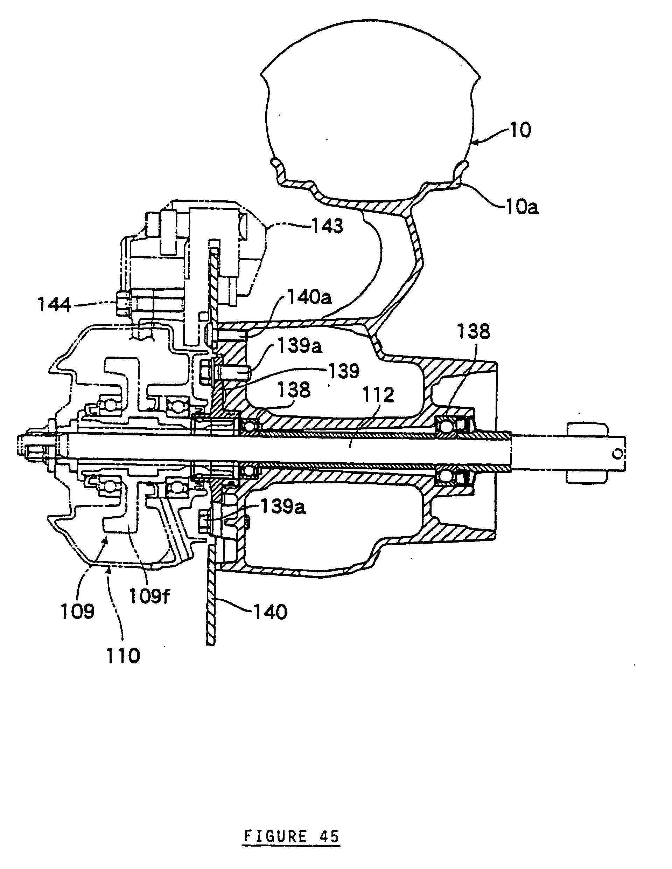

The caliper 143 is attached to the left case half 110e of the left division 110 with two bolts 144, as shown in Fig. 44 and Fig. 45, and arranged such that removal of one of these bolts 144 allows the caliper to be rotated about the other bolt 144, the caliper 144 being located laterally outwardly of a rim 10a of the rear wheel 10.

Therefore, since the caliper 143 is rotated without interference with the rear wheel 10, the caliper 143 can be rotated by a given amount of angular displacement, thereby providing easy maintenance of pad replacement or the like. Further, interference between caliper 143 and the rim 10a of the rear wheel 10 can be avoided even when a brake disk 140 with a little larger diameter is employed. Further, the caliper 143 is attached to the left case half 110e on the outside of the vehicle, thereby effecting easy removal.

On the opposite side of the rear wheel 10 from the disk brake 137 is provided a mounting plate 145, with the stationary rear axle 112 therethrough, and to the mounting plate 145 are attached an ABC sensor 145a, and a stopper member 145b for stopping rotation of the mounting plate 145, between the plate and the right division 111 of the rear arm 8.

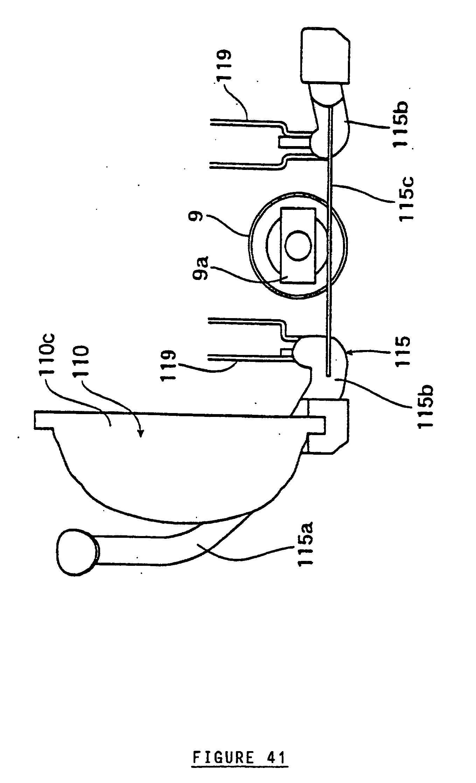

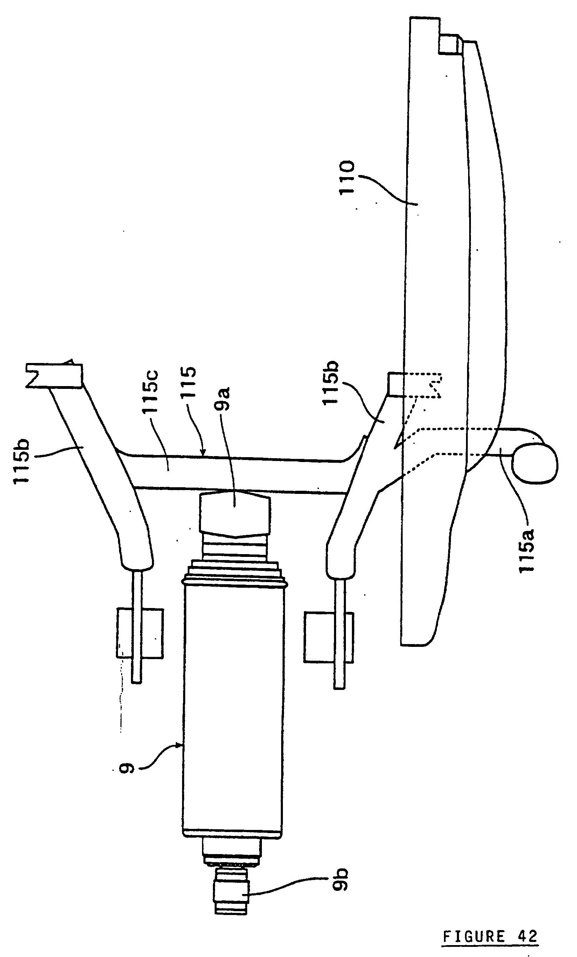

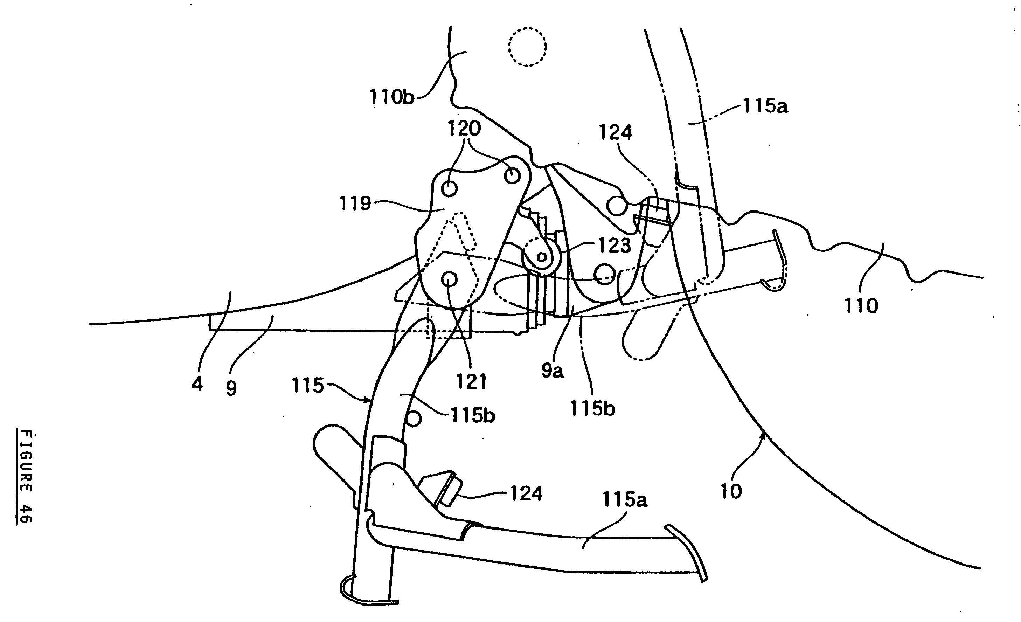

On the other hand, the main stand 115, as shown in Fig. 46, etc, is mounted to the engine as a "fixed section" through a bracket 119. That is, as shown in Fig. 41, the bracket 119 is comprised of a pair of left and right bracket members, and as shown in Fig. 46, fixed to the engine 4 with screws 120; a pair of legs 115b of the main stand 115 are mounted pivotally on the bracket 119 through pivot axis 121; and as shown in Fig. 41 and Fig. 42, both legs 115b are connected to each other by a connecting bar 115c. To one of the legs 115b is fixed a foot bar 115a approximately vertically, and between the main stand 115 and the bracket 119 is disposed a spring 122, as shown in Fig. 1.

On the bracket 119 is provided a roller type first stopper 123 for rolling movement, and the first stopper 123 is arranged such that when the main stand 115 is set back upward to be rotated to a predetermined position, as shown in Fig. 46 by double dot and dash lines, the first stopper 123 comes into contact with the main stand 115 to stop the rotation.

The first stopper 123 may be provided on the main stand 115.

The main stand 115 is provided with a second stopper 124, which is arranged such that when the left division 110 as a "swinging section" makes a predetermined amount of downward swinging movement, the second stopper 124 comes into contact with the left division 110.

As described above, when the main stand 115 is set back upward at the start of the vehicle, the main stand 115 comes into contact with the first stopper 123, and the rotation of the main stand 115 is stopped with shock absorbing action, as shown in Fig. 46 by double dot and dash lines, preventing the main stand 115 from colliding with the left division 110. Therefore, the position to which the main stand is set back upward, can be brought closer to the left division 110, providing a larger bank angle setting.

During running, when the left division 110 makes a predetermined amount of downward swinging movement relative to the engine 4, the left division 110 comes into contact with the second stopper 124 of the main stand 115, mitigating colliding shock between the main stand 115 and the left division 110.

In this connection, if a stopper provided between the main stand 115 and the left division 110 is required to fulfil a shock absorbing function, since the stopper is in contact with the main stand 115 or the left division 110 even when the vehicle is running and the left division 110 is also swinging at all times, so that the contact portion of the stopper will be worn down due to sliding movement. On the contrary, according to this embodiment, when the main stand 115 is set back upward, the first stopper 123 on the bracket 119 acts as a shock absorber, and during running, the second stopper 124 acts as a shock absorber only when the left division 110 makes a predetermined amount of downward swinging movement. As a result, colliding shock between the main stand 115 and the left division 110 can be mitigated, the wear of the second stopper 124 can be prevented and a larger bank angle can be achieved.

In addition, the second stopper 124 is provided on the main stand 115, and a contact surface of the stopper 124 is provided on the let division 110, resulting in a simplified structure. That is, if the second stopper 124 is to be provided on the right division 111, difficult machining work to the forged part is necessary, and further, a contact surface for the second stopper 124 must be provided on the rod-like main stand 115, which requires troublesome positioning.

On the contrary, the second stopper 124 can be fixed to the main stand 115 easily by welding, etc, and the contact surface can be easily positioned because of the left division 110 having a relatively large surface area.

In addition, the main stand 115 and the bracket 119, as shown in Fig. 41 and Fig. 42, are disposed around the rear cushion 9, which is protected by these components.

The seat 2, as shown in Fig. 5, is adapted for a rider and a co-rider; the region under the seat 2 are covered continuously from the forward end through the rear end thereof by the seat underside covers 95, etc; and the muffler 118 is disposed under the cover 95. The muffler 118 extends obliquely upwardly toward the rear; downwardly of the muffler 118 is exposed the rear axle 112; and in front of the muffler 118 is disposed a tandem foot rest 127.

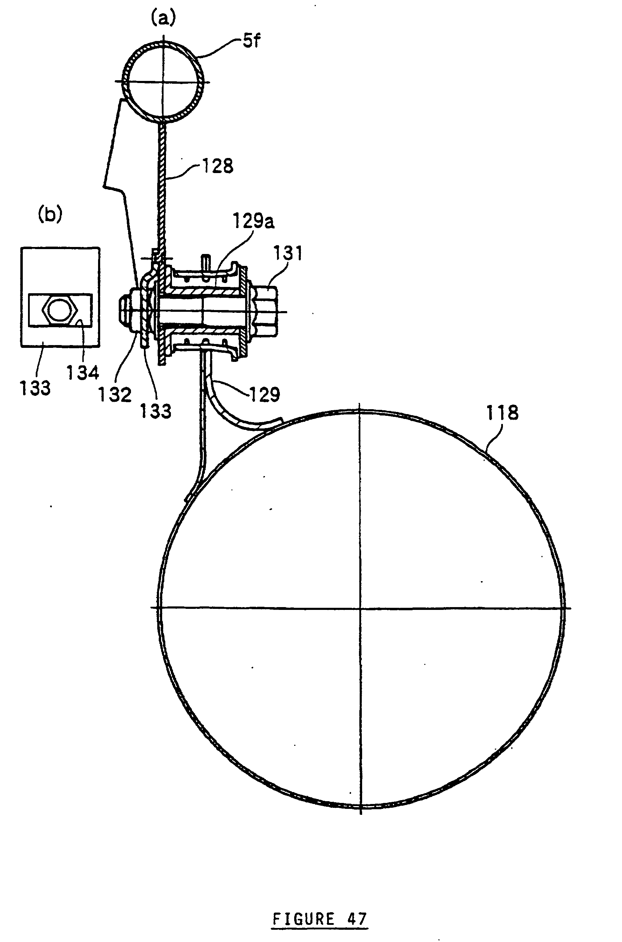

The muffler 118 is supported by the back stay 5f as described below. That is, as shown in Fig. 5 and Fig. 47, a frame side bracket 128 is attached to the back stay 5f while a muffler side bracket 129 is attached at the longitudinal middle portion of the muffler 118.

The muffler side bracket 129 is formed with a boss member 129a, through which is inserted a bolt 131, which is fitted in a slide nut 132 on the frame side bracket 128, and thus an elastic support of the muffler 118 is completed.

The slide nut 132 is held on the frame side bracket 128 through a nut retainer 133, for sliding movement in the longitudinal direction of the vehicle relative to the nut retainer 133 through an elongated hole. Downwardly of the muffler mounting section is located the rear axle 112.

In this way, an intermediate stay can be eliminated, so that the number of parts and mounting workhours can be reduced, and as a result of the muffler 118 being disposed close to the back stay 5f, the muffler 118 can be located at a higher position. Further, the slide nut 132 allows easy longitudinal positioning of the muffler 118 in assembling. Furthermore, the slide nut 132 is held in advance between the frame side bracket 128 and the nut retainer 133, so that the bolt 131 can be easily fitted in the nut in assembling.

In addition, the tandem foot rests 127 have approximately a box-like shape, and are arranged such that they are disposed foldably in box-like brackets 5i and can be housed along the boomerang covers 89 when not in use.

The tandem foot rests 127 are thus provided in front of the muffler 118, thereby providing a large degree of freedom of co-rider's riding posture.

Further, to the rear pipe 5d above the back stay 5f, as shown in Fig. 8, is bolted a mounting stay 135, on which are mounted a plurality of electric components 136. These electric components 136 are covered by the seat underside cover 95.

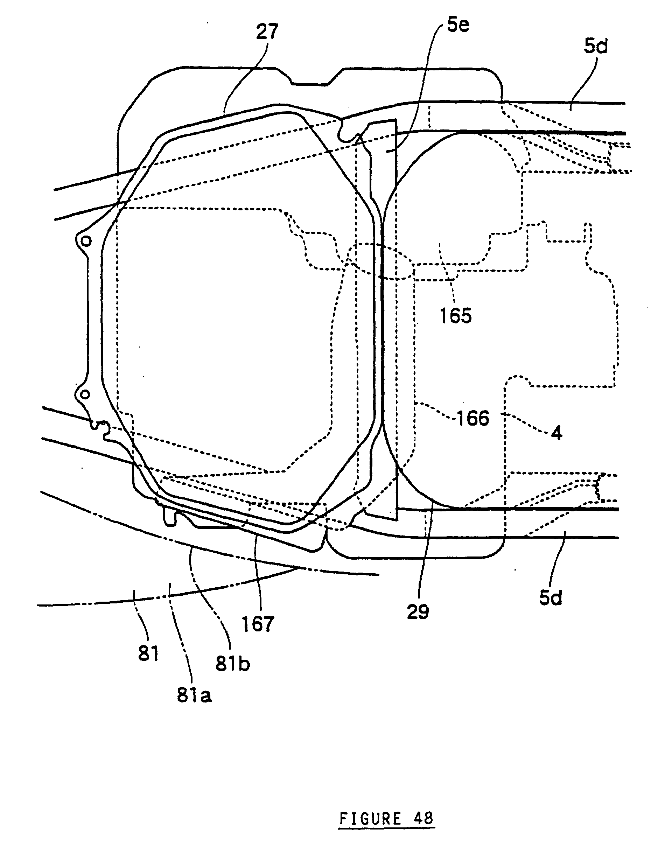

As shown in Fig. 48-Fig. 50, the engine 4 is provided with a V-belt chamber 165 accommodating a dry type V-belt speed changer; an outside air induction duct 166 extends from the V-belt chamber 165; and at the leading end of the outside air induction duct 166 is disposed an element 67 exposed to the outside, the front of the element 67 facing the vertical wall 81b of the foot board 81.

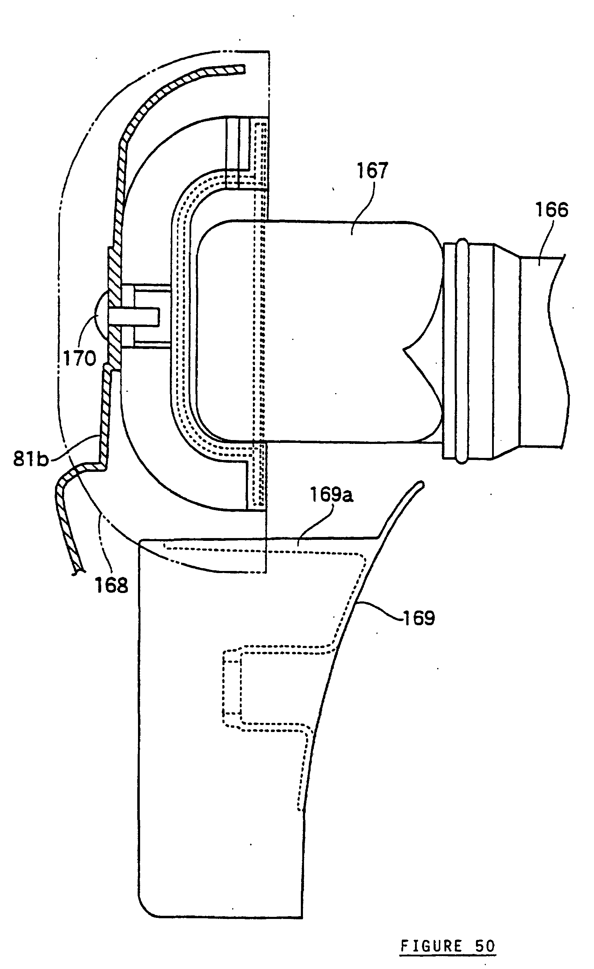

Specifically, the V-belt chamber 165 is disposed on the right side (one side) of the vehicle when viewed from the rear; the outside air induction duct 166 extends from the V-belt chamber 165 toward the left side (the other side) of the vehicle, passing through the space between the fuel tank 27 and the container box 29. The outside air induction duct 166 is connected to the element 167 fixed to the rear pipe 5d on the left side of the vehicle. On the element 167 is provided a urethane foam 168, and under the element 167, a shield member 169 is fixed to the engine 4, a shield plate 169a of the shield member 169 preventing mud and water from entering in the element 167 from the underside. As a result of the foot board vertical wall 81b being attached to the element 167 with a screw 170, the urethane foam 168 is compressed (see Fig. 50).

As described above, outside air flows into the V-belt chamber 165 through the outside air induction duct 166 to cool the dry type V-belt speed changing mechanism.

In addition, at the leading end of the outside air induction duct 166 is disposed the element 167 exposed to the outside, and the front of the element 167 faces the vertical wall 81 b, so that the foot board vertical wall 81 b fulfils a water-tight function without an additional chamber as in the prior art, and the element 167 and the outside air induction duct 166 are not required to be removed together with the foot board 81 at the time of maintenance, providing good working efficiency.

In addition, the V-belt chamber 165 is disposed on the right side of the vehicle, and the outside air induction duct 166 extends from the V-belt chamber 165 toward the left side of the vehicle, the element 167 of the outside induction duct 166 being disposed at the right side of the vehicle, resulting in a larger outside air induction duct 166, which would cause any water into the duct to be scattered throughout the duct, preventing ingress of water into the V-belt chamber 165.

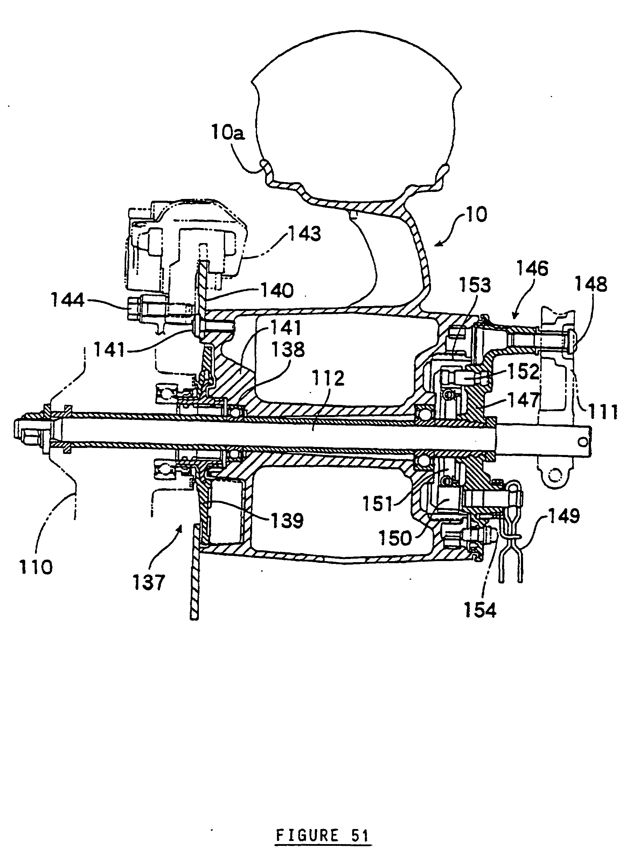

Fig. 51 shows a second embodiment.

Said second embodiment has the same features than the first embodiment and only different or additional features are described. The description of the features which are identical with the first embodiment is omitted.

In this embodiment 2, a parking brake or a drum brake 146 is disposed on the opposite side from the disk brake 137, that is, on the right side of the vehicle when viewed from the rear of the rear wheel 10, so that the main brake and the parking brake are disposed separate from each other on the left and right sides.

Regarding the disk brake 137, the brake disk 140 is fixed to the wheel cast 141 with bolts 142, so that the clutch hub 139 is pressed against the wheel cast 141 by the brake disk 140, preventing coming-off of the clutch hub.

Thus, mounting work of the clutch hub 139 can be performed efficiently without need of fixing the clutch hub 139 with bolts separately.

In addition, the drum brake 146 is arranged such that a brake plate 147 penetrated by the rear axle 112, is fixed to the right division 111 of the rear arm 8 with bolts 148; to the brake plate 147 is attached a cam lever 149 for rotation; and rotation of the cam lever 149 causes a cam 150 to be rotated. Rotation of the cam 150 in turn causes a pair of brake shoes 151 to be opened/closed about an anchor pin, and thus these brake shoes 151 are brought into pressure-contact with a brake drum 153 to produce braking force. The ABC sensor 154 is mounted on the brake plate 147.

As described above, the hydraulic disk brake 137 is used as a main brake, providing an excellent braking function. Also, the mechanical drum brake 146 is used as a parking brake, effecting stability in braking force even when the brake is activated for a long time.

Further, the disk brake 137 and the drum brake 146 are disposed separately on the left and right sides of the rear wheel, so that both brakes can be arranged in a spacially efficient manner.

According to the embodiments as described above between a foot board having a foot rest for a rider and extending to a region under a seat and a seat underside cover disposed a short distance below said seat, is provided an exterior component extending approximately horizontally in the shape of a boomerang. Therefore, this exterior component serves as an accent, and the color and the material of the interior component can be changed, improving the degree of freedom in designing.

In addition, through this exterior component, the accuracy of assembly of the foot board and the seat underside cover can be improved and fitting portions of the front board and the seat underside cover to the exterior component can be hidden, improving the quality of external appearance.

Further, if the exterior component is removed, maintenance of equipment disposed inside the exterior component can be performed easily.

The embodiments described above are teaching a vehicle, especially scooter type vehicle, with an exterior component 89 provided between foot board 81 and a seat 2 of the vehicle. Said exterior component 89 extends in longitudinal direction of the vehicle and has a convex-shape. Said exterior component 89 has an upwardly positioned middle part and a front and rear end part each extending in a downward direction. Said foot board 81 has a foot rest 81a for a rider and extending to a region under the seat 2. A seat underside cover 95 is disposed a short distance below said seat 2 and said exterior component 89 is attached to said foot board 81 and seat underside cover 95.

According to the embodiments as described above, cover members covering the engine are formed with cutouts through which the side surface of the crank case is exposed to the outside, thereby effecting rider's easy footing during stoppage of the vehicle. That is, when the engine is fixed to the frame, the engine is located downwardly of the rider's seating position, and the crank case becomes the widest portion of the engine. Therefore, if the whole side of the crank case of the engine is covered by cover members, the vehicle width becomes large, which impairs easy footing characteristics. On the other hand, if the cover members are provided with cutouts through which the crank case is exposed, the width of the crank case of the engine and that of the cover members can be set at approximately the same value, so that the vehicle width of the portion around which the rider's foot touches the ground, can be made small, effecting easy footing as well as improved design.

In addition, the crank case of the engine can be thus exposed to the outside through the cutouts, so that the crank case is exposed directly to the running wind, improving cooling capacity.

The embodiments described above are teaching a vehicle, especially scooter type vehicle, with an engine 4 fixed to a body frame 5, a crankcase 4a of said engine 4 is positioned downwardly of a seat 2 for a rider of the vehicle. A cover means 81, 89 is provided covering said engine 4, said cover means 81, 89 is formed with at least one cutout 81d, 89c, and a side surface of said crankcase 4a is exposed to the outside through said cutout 81d, 89c. Said cover means comprises cover members 81, 89 each provided with a cutout 81d, 89c, especially said cover members are the foot board 81 and the convex-shaped exterior component 89.

According to the embodiments as described above, the cowl stay is disposed outside the front fork pipe, so that load on the foot rest can be carried by the cowl stay in an optimum location, and the cowling (cover) can be supported appropriately. Therefore, there is no need for a long stay extending from the frame, effecting size reduction and weight saving of the frame as a whole. Said stays are in the shape of a loop and fixed, at their upper and lower ends, to said body frame.

In addition, although adequate support for various components is difficult at the front of the vehicle because of rotation of the front fork pipes, the cowl stays are disposed at positions outside the front fork pipes without interference, so that these components can be supported easily on the cowl stays or the like.

The embodiments described above are teaching a vehicle, especially scooter type vehicle, with outside front fork pipes 14 disposed between cowl stays 67 fixed to a body frame 5. Said cowl stays 67 are supporting at least one cover member 45 and said cowl stays 67 are attached to foot rests 56c of the vehicle for carrying a load of the foot rests 56c. Said cowl stays 67 are in the shape of a loop and fixed, at their upper and lower ends 67a, 67b, to said body frame 5.

The embodiments are teaching a structure around a muffler for motorcycles, wherein a region under a seat adapted for a rider and a co-rider is covered by a continuous cover member extending from the forward end to the rear end of said seat, a muffler is disposed under said cover member, an axle is exposed from under said muffler, and a tandem foot rest is disposed in front of said muffler. Downwardly of said cover is disposed a fitting section in the middle of said muffler, and downwardly of said fitting section is disposed said axle.

According to the embodiments as described above, tandem foot rests are disposed in front of a muffler, providing a large degree of freedom of co-rider's riding posture.

The embodiments described above are teaching a vehicle, especially scooter type vehicle, with a seat 2, especially provided for a rider and a co-rider, a continuous cover member 95 extending from a forward end to a rear end of said seat 2 covering a region under said seat 2, a muffler 118 disposed under said cover member 95, an axle 112 of the vehicle provided under said muffler 118 and a tandem foot rest 127 disposed in front of said muffler 118. A fitting means 129, 129a, 131-134 for said muffler 118 is provided on a middle of said muffler 118 and downwardly of said cover member 95, said axle 112 is disposed downwardly of said fitting means 129, 129a, 131-134.

## Claims

1. Scooter type vehicle with a body frame (5), a seat (2) provided for a rider and a co-rider, a continuous cover member (95) extending from a forward end to a rear end of said seat (2) covering a region under said seat (2), a muffler (118) disposed under said cover member (95), an axle (112) of the vehicle provided under said muffler (118) and a tandem foot rest (127) disposed in front of said muffler (118),
**characterized by**
a fitting means adjustably fitting said muffler (118) on the body frame (5), said fitting means comprises a frame side bracket (128), a muffler side bracket (129) and a slide nut (132), said slide nut (132) is connected with the muffler side bracket (129).

2. Scooter type vehicle according to claim 1, **characterized in that** fitting means (129, 129a, 131-134) for said muffler (118) is provided on a middle of said muffler (118) and downwardly of said cover member (95), said axle (112) is disposed downwardly of said fitting means (129, 129a, 131-134).

3. Scooter type vehicle according to claim 1 or 2, **characterized by** an exterior cover (89) provided between foot board (81) and a seat (2) of the vehicle, wherein said exterior cover (89) extends in longitudinal direction of the vehicle and has a convex-shape.

4. Scooter type vehicle according to claim 3, **characterized in that** said exterior cover (89) has an upwardly positioned middle part and a front and rear end part each extending in a downward direction.

5. Scooter type vehicle according to claim 3 or 4, **characterized in that** said cover member is a seat underside cover (95) disposed a short distance below said seat (2) and said exterior cover (89) is attached to said foot board (81) and seat underside cover (95).

6. Scooter type vehicle according to at least one of the claims 1 to 5, **characterized in that** said foot board (81) has a foot rest (81 a) for a rider and extending to a region under the seat (2).

7. Scooter type vehicle according to at least one of the claims 1 to 6, **characterized by** an engine (4) fixed to the body frame (5), a crankcase (4a) of said engine (4) is positioned downwardly of the seat (2) for a rider of the vehicle, a cover means (81, 89) is provided covering said engine (4), said cover means (81, 89) are formed with at least one cutout (81d, 89c), and a side surface of said crankcase (4a) is exposed to the outside through said cutout (81d, 89c).

8. Scooter type vehicle according to claim 7, **characterized in that** said cover means comprises cover members (81, 89) each provided with a cutout (81d, 89c), especially said cover members are the foot board (81) and a convex-shaped exterior component (89).

9. Scooter type vehicle according to at least one of the claims 1 to 8, **characterized by** outside front fork pipes (14) disposed between cowl stays (67) fixed to a body frame (5), wherein said cowl stays (67) are supporting at least one cover member (45) and said cowl stays (67) are attached to foot rests (56c) of the vehicle for carrying a load of the foot rests (56c).

10. Scooter type vehicle according to claim 9, **characterized in that** said cowl stays (67) are in the shape of a loop and fixed, at their upper and lower ends (67a, 67b), to said body frame (5).

## Patentansprüche

1. Fahrzeug vom Rollertyp mit einem Karosserierahmen (5), einem Sitz (2), vorgesehen für einen Fahrer und einen Beifahrer, einem durchgehendem Abdeckungsteil (95), das sich von einem vorderen Ende zu einem hinteren Ende des Sitzes (2) erstreckt, das einen Bereich unter dem Sitz (2) abdeckt, einem Schalldämpfer (118), angeordnet unter dem Abdeckungsteil (95), einer Achse (112) des Fahrzeuges, vorgesehen unter dem Schalldämpfer (118), und einer Tandem- Fußstütze (127), angeordnet vor dem Schalldämpfer (118),
**gekennzeichnet durch**
eine Einsetzeinrichtung, die den Schalldämpfer (118) an dem Karosserierahmen (5) einstellbar einsetzt, wobei die Einsetzeinrichtung einen rahmenseitigen Halter (128), einen schalldämpferseitigen Halter (129) und eine Gleitmutter (132) aufweist, wobei die Gleitmutter (132) mit dem schalldämpferseitigen Halter (129) verbunden ist.

2. Fahrzeug vom Rollertyp nach Anspruch 1, **dadurch gekennzeichnet, dass** die Einsetzeinrichtung (129, 129a, 131 -134) für den Schalldämpfer (118) an einer Mitte des Schalldämpfers (118) und abwärts des Abdeckungsteiles (95) vorgesehen ist und die Achse (112) abwärts der Einsetzeinrichtung (129, 129a, 131 -134) angeordnet ist.

3. Fahrzeug vom Rollertyp nach Anspruch 1 oder 2, **gekennzeichnet durch** eine äußere Abdeckung (89), vorgesehen zwischen dem Fußbrett (81) und einem Sitz (2) des Fahrzeuges, wobei sich die äußere Abdeckung (89) in Längsrichtung des Fahrzeuges erstreckt und eine konvexe Form hat.

4. Fahrzeug vom Rollertyp nach Anspruch 3, **dadurch gekennzeichnet, dass** die äußere Abdeckung (89) ein aufwärts positioniertes mittleres Teil und ein vorderes und hinteres Endteil hat, die sich alle in eine abwärtige Richtung erstrecken.

5. Fahrzeug vom Rollertyp nach Anspruch 3 oder 4, **dadurch gekennzeichnet, dass** das Abdeckungsteil eine Sitzunterseitenabdeckung (95) ist, die in einem kurzen Abstand unter dem Sitz (2) angeordnet ist und die äußere Abdeckung (89) ist mit dem Fußbrett (81) und der Sitzunterseitenabdeckung (95) verbunden.

6. Fahrzeug vom Rollertyp nach zumindest einem der Ansprüche 1 bis 5, **dadurch gekennzeichnet, dass** das Fußbrett (81) eine Fußstütze (81a) für einen Fahrer hat und sich in einen Bereich unter den Sitz (2) erstreckt.

7. Fahrzeug vom Rollertyp nach zumindest einem der Ansprüche 1 bis 6, **gekennzeichnet durch** einen Motor (4), befestigt an dem Karosserierahmen (5), wobei ein Kurbelgehäuse (4a) des Motors (4) unterhalb des Sitzes (2) für einen Fahrer des Fahrzeuges positioniert ist, eine Abdeckungseinrichtung (81, 89) vorgesehen ist, die den Motor (4) abdeckt, wobei die Abdeckungsmittel (81, 89) mit zumindest einem Ausschnitt (81d, 81c) gebildet sind, und eine Seitenoberfläche des Kurbelgehäuses (4a) nach außen **durch** den Ausschnitt (81d, 81c) freiliegt.

8. Fahrzeug vom Rollertyp nach Anspruch 7, **dadurch gekennzeichnet, dass** die Abdeckungseinrichtung Abdeckungsteile (81, 89) aufweist, die jeweils mit einem Ausschnitt (81d, 89c) versehen sind, wobei insbesondere die Abdeckungsteile das Fußbrett (81) und eine konvex- förmiges äußeres Bauteil (89) sind.

9. Fahrzeug vom Rollertyp nach zumindest einem der Ansprüche 1 bis 8, **gekennzeichnet durch** äußere Vordergabelrohre (14), angeordnet zwischen den Verkleidungshaltern (67), befestigt an einem Karosserierahmen (5), wobei die Verkleidungshalter (67) zumindest ein Abdeckungsteil (45) lagern und die Verkleidungshalter (67) mit den Fußstützen (56c) des Fahrzeuges verbunden sind, zum Tragen einer Last der Fußstützen (56c).

10. Fahrzeug vom Rollertyp nach Anspruch 9, **dadurch gekennzeichnet, dass** die Verkleidungshalter (67) in einer Form einer Schlaufe sind und an ihren oberen und unteren Enden (67a, 67b) an dem Karosserierahmen (5) befestigt sind.

## Revendications

1. Véhicule de type scooter, avec un cadre de carrosserie (5), un siège (2), prévu pour un conducteur et un passager, un organe de couverture (95) continu, s'étendant depuis une extrémité avant jusqu'à une extrémité arrière dudit siège (2) et couvrant une région située au-dessous dudit siège (2), un silencieux (118) disposé sous ledit organe de couverture (95), un essieu (112) du véhicule étant placé sous ledit silencieux (118) et un repose-pied tandem (127) étant disposé à l'avant dudit silencieux (118),
**caractérisé par** des moyens d'ajustement, ajustant de façon adaptable ledit silencieux (118) sur le cadre de carrosserie (5), lesdits moyens d'ajustement comprenant un support latéral de cadre (128), un support latéral de silencieux (129) et un écrou coulissant (132), ledit écrou coulissant (132) étant relié au support latéral de silencieux (129).

2. Véhicule de type scooter, selon la revendication 1, **caractérisé en ce que** lesdits moyens d'ajustement (129, 129a, 131-134) pour ledit silencieux (118) sont prévus à mi-longueur dudit silencieux (118) et vers le bas dudit organe de couverture (95), ledit essieu (112) est disposé vers le bas desdits moyens d'ajustement (129, 129a, 131-134).

3. Véhicule de type scooter selon la revendication 1 ou 2, **caractérisé par** un couvercle extérieur (89), prévu entre le panneau de marchepied (81) et un siège (2) du véhicule, dans lequel ledit couvercle extérieur (89) s'étend dans la direction longitudinale du véhicule et est de forme convexe.

4. Véhicule de type scooter, selon la revendication 3, **caractérisé en ce que** ledit couvercle extérieur (89) comprend une partie médiane, placée en partie haute, et une partie d'extrémité avant et arrière, s'étendant chacune en direction du bas.

5. Véhicule de type scooter selon la revendication 3 ou 4, **caractérisé en ce que** ledit organe de couverture est un couvercle de dessous de siège (95), disposé à courte distance au-dessous dudit siège (2), et ledit couvercle extérieur (89) est fixé sur ledit panneau de marchepied (81) et ledit couvercle de face inférieure de siège (95).

6. Véhicule de type scooter selon au moins l'une des revendications 1 à 5, **caractérisé en ce que** ledit panneau de marchepied (81) comprend un repose-pied (81a) pour un conducteur et s'étendant vers une région située au-dessous du siège (2).

7. Véhicule de type scooter selon au moins l'une des revendications 1 à 6, **caractérisé par** un moteur thermique (4), fixé au cadre de carrosserie (5), un vilebrequin (4a) dudit moteur thermique (4) est positionné en partie basse du siège (2), pour un conducteur du véhicule, des moyens de couverture (81, 89) sont prévus en couvrant ledit moteur thermique (4), lesdits moyens de couverture (81, 89) sont formés d'au moins une découpure (81d, 89c) et une surface latérale dudit vilebrequin (4a) est exposée à l'extérieur, à travers ladite découpure (81d, 89c).

8. Véhicule de type scooter selon la revendication 7, **caractérisé en ce que** lesdits moyens de couverture comprennent des organes de couverture (81, 89), chacun muni d'une découpure (81d, 89c), spécialement lesdits organes de couverture sont le panneau de marchepied (81) et un composant extérieur (89) à forme convexe.

9. Véhicule de type scooter selon au moins l'une des revendications 1 à 8, **caractérisé par** des tubes de fourche avant extérieurs (14), disposés entre les étais d'auvent (67), fixés sur un cadre de carrosserie (5), dans lequel lesdits étais d'auvent (67) supportent au moins un organe de couverture (45), et lesdits étais d'auvent (67) sont fixés à des repose-pied (56c) du véhicule, pour supporter une charge des repose-pieds (56c).

10. Véhicule de type scooter selon la revendication 9, **caractérisé en ce que** lesdits étais d'auvent (67) sont à la forme d'une boucle et sont fixés, à leurs extrémités supérieures et inférieures (67a, 67b), sur ledit cadre de carrosserie (5).
